(19) Europäisches Patentamt
European Patent Office
Office européen des brevets

(11) **EP 4 597 401 A1**

(12) **EUROPÄISCHE PATENTANMELDUNG**

(43) Veröffentlichungstag:
**06.08.2025 Patentblatt 2025/32**

(21) Anmeldenummer: 24160913.0

(22) Anmeldetag: **01.03.2024**

(51) Internationale Patentklassifikation (IPC):
**G06Q 30/018** (2023.01)  **G07F 13/02** (2006.01)
**G07C 5/00** (2006.01)

(52) Gemeinsame Patentklassifikation (CPC):
**G06Q 30/018; G07C 5/008; G07F 9/002;**
**G07F 13/025**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität: **31.01.2024 EP 24155107**

(71) Anmelder:
• **Cryoshelter BioLNG GmbH**
**8143 Dobl-Zwaring (AT)**

• **Cryoshelter LH2 GmbH**
**8143 Dobl-Zwaring (AT)**

(72) Erfinder: **Rebernik, Matthias**
**8010 Graz (AT)**

(74) Vertreter: **Schwarz & Partner Patentanwälte
GmbH
Patentanwälte
Wipplingerstraße 30
1010 Wien (AT)**

(54) **VERFAHREN ZUR BESTIMMUNG EINES UMWELTEINFLUSSES EINES FAHRZEUGS**

(57) Die Erfindung betrifft ein Verfahren zur Bestimmung eines Umwelteinflusses eines Fahrzeugs (1) in einem System umfassend das Fahrzeug (1) und eine Datenverarbeitungseinheit (9),
wobei das Fahrzeug eine Sensoreinheit (10) aufweist, die einen Betankungsvorgang, einen Entnahmevorgang oder einen Verbrauch von Kraftstoff erkennt,
wobei das Verfahren die folgenden Schritte umfasst:
- Senden einer ersten Meldenachricht an die Datenverarbeitungseinheit (9), wobei die erste Meldenachricht einen Kennwert eines Umwelteinflusses, z.B. einer $CO_2$-Bilanz, des gewählten Kraftstoffes oder eine Identifikation der Herkunft des gewählten Kraftstoffes umfasst,
- im Fahrzeug (1), Senden einer zweiten Meldenachricht mit einer Fahrzeugidentifikation an die Datenverarbeitungseinheit (9),
- in der Datenverarbeitungseinheit (9), Erstellen eines Dateneintrags umfassend die Fahrzeugidentifikation und den Kennwert der $CO_2$-Bilanz des Kraftstoffes oder der Identifikation der Herkunft des Kraftstoffes,
- Bestimmen des Umwelteinflusses des Fahrzeugs (1) auf Basis des genannten Dateneintrags.

EP 4 597 401 A1

DB1

{fuel1, bil1}
{fuel2, bil2}

DS

{ID1, bil1, time1}
{ID1, bil1, time2}
{ID1, bil2, time3}

DE

→ CO2?

msg1(ID1, fuel1)
+zert1

msg3(stop)

msg2(ID1, ack, time1)
+zert2

init

ID1

fuel1  fuel2

Fig. 1

**Beschreibung**

Die Erfindung betrifft ein Verfahren zur Bestimmung eines Umwelteinflusses eines Fahrzeugs in einem System umfassend das Fahrzeug und eine Datenverarbeitungseinheit.

Aus dem Stand der Technik ist bekannt, Fahrzeuge mit unterschiedlichsten Kraftstoffen zu betanken. Soll das Fahrzeug betankt werden, wird das Fahrzeug zu einer Tankstelle verbracht und es wird ein Kraftstoff ausgewählt, der für den Motor des Fahrzeugs geeignet ist.

Probleme könnten auftreten, wenn der Motor des Fahrzeugs beispielsweise nur mit Diesel betrieben werden kann, aber das Fahrzeug versehentlich mit Benzin betankt wird, wodurch beispielsweise Motorschäden auftreten können. Um dies zu verhindern, sieht das in der Druckschrift DE 10 2006 044 780 A1 offenbarte Verfahren vor, eine Kommunikation zwischen Tankstelle und Fahrzeug aufzubauen. Das Fahrzeug zeigt dabei der Tankstelle an, welcher Kraftstoff für den Motor des Fahrzeugs geeignet ist (z.B. Benzin oder Diesel), woraufhin die Tankstelle die Betankung freigibt oder auch ein entsprechendes Warnsignal ausgibt.

Unabhängig von dem oben erläuterten Problem der versehentlichen Falschbetankung, bei der es zu Motorschäden kommen kann, könnten an der Tankstelle jedoch auch mehrere unterschiedliche Kraftstoffe bereitgestellt werden, die alle für das Fahrzeug geeignet sind. Als Beispiel hierfür können fossiles Methan (d.h. Methan fossilen Ursprungs) und Biomethan (d.h. aus biogenen Stoffen erzeugtes und daher im Wesentlichen CO2-neutrales Methan) genannt werden. Unabhängig davon, ob das Fahrzeug mit fossilem Methan oder Biomethan betankt wird, wird es jedenfalls nicht zu einem Motorschaden kommen.

Es ist jedoch ein Bestreben der modernen Fahrzeugtechnik, dass Fahrzeuge ausschließlich mit CO2-neutralen Kraftstoffen betrieben werden. Im Beispiel von fossilem Methan und Biomethan könnte zwar gesetzlich vorgegeben werden, dass Tankstellen nur mehr Biomethan anbieten dürfen, was jedoch nicht ausschließt, dass der Benutzer des Fahrzeugs schlichtweg eine andere Tankstelle im Ausland aufsucht, die nicht derartigen Beschränkungen unterliegt und daher fossiles Methan anbieten kann. Weiters könnten dem Benutzer Sanktionen auferlegt werden, wenn dieser sein Fahrzeug mit fossilem Methan betankt, jedoch unterscheiden sich fossiles Methan und Biomethan nicht in ihrer chemischen Zusammensetzung, sodass ein nachträgliches Überprüfen des getankten Kraftstoffes durch chemische Tests nicht möglich ist.

Es ist die Aufgabe der Erfindung, ein Fahrzeug, bzw. ein Betankungssystem für Fahrzeuge bereitzustellen, bei denen verifiziert bestimmbar ist, welchen Umwelteinfluss das Fahrzeug auf die Umwelt ausübt bzw. ausgeübt hat.

Diese Aufgabe wird gelöst durch ein Verfahren zur Bestimmung eines Umwelteinflusses eines Fahrzeugs in einem System umfassend das Fahrzeug und eine Datenverarbeitungseinheit,

wobei das Fahrzeug einen Energiespeicher, insbesondere einen Fahrzeugtank zur Lagerung von fluidem Kraftstoff, (gegebenenfalls eine mit dem Energiespeicher verbundene Einspeiseeinheit) und eine Sensoreinheit aufweist (welche gegebenenfalls in der Einspeiseeinheit vorliegen kann), die einen Betankungsvorgang, einen Entnahmevorgang oder einen Verbrauch des Kraftstoffs erkennt,
wobei das Verfahren die folgenden Schritte umfasst:

- Auswählen eines gewünschten Kraftstoffs und Senden einer ersten Meldenachricht an die Datenverarbeitungseinheit, wobei die erste Meldenachricht eine betankte oder zu betankende Menge an Kraftstoff und einen Kennwert eines Umwelteinflusses, insbesondere eine CO2-Bilanz des gewählten Kraftstoffes oder eine Identifikation der Herkunft des gewählten Kraftstoffes umfasst,
- im Fahrzeug, wenn die Sensoreinheit einen Betankungsvorgang, einen Entnahmevorgang oder einen Verbrauch des Kraftstoffs erkennt, Senden einer zweiten Meldenachricht an die Datenverarbeitungseinheit,
- Bestimmen des Umwelteinflusses des Fahrzeugs auf Basis der in der ersten Meldenachricht angegebenen Informationen, wobei die zweite Meldenachricht bevorzugt zur Verifizierung der ersten Meldenachricht oder zur Ermittlung eines zusätzlichen Umwelteinflusses herangezogen wird. In anderen Worten kann der Umwelteinfluss des Fahrzeugs auf Basis der in der (zumindest einen) ersten Meldenachricht und der in der (zumindest einen) zweiten Meldenachricht angegebenen Informationen bestimmt werden. Der letztgenannte Schritt wird in der Regel von der Datenverarbeitungseinheit durchgeführt.

Dieses Verfahren hat den Vorteil, dass zuverlässig aufgezeichnet werden kann, ob das Fahrzeug umweltschonend oder umweltbelastend betrieben wird. Die Herausforderungen in diesem System bestehen insbesondere darin, dass z.B. durch eine chemische Analyse des Kraftstoffes nicht bestimmbar ist, ob das Fahrzeug umweltfreundlich betankt wurde. Gleichzeitig ist ein einfaches Protokollieren des betankten Kraftstoffes, z.B. durch einen Fahrer des Fahrzeuges, nicht ausreichend, um den Umwelteinfluss des Fahrzeuges genau und manipulationssicher zu bestimmen.

Das erfindungsgemäße Verfahren schafft jedoch eine Möglichkeit, die von der Tankstelle oder einem Tankstellensystem gelieferten Angaben über einen Betankungsvorgang mit den vom Fahrzeug gelieferten Angaben über einen Betankungsvorgang abzugleichen. Da davon ausgegangen werden kann, dass ein einmal in den Energiespeicher betankter Kraftstoff auch wieder aus diesem entnommen wird, kann auch der weiterführende Schluss gezogen werden, dass auch dem entnommenen bzw. verbrauchten Kraftstoff die Eigenschaften des betankten Kraftstoffs zugewiesen werden können. Erst dadurch wird eine manipulationssichere Aufzeichnung des betankten Kraftstoffs mit anschließender Auswertung des Umwelteinflusses ermöglicht.

Der erfindungsgemäße Abgleich der Meldenachrichten beruht auf der Erkenntnis, dass eine einseitige Meldung der Tankstelle oder eines Tankstellensystems über einen Betankungsvorgang nicht ausreichend ist, um den betankten Kraftstoff manipulationssicher zu melden, da das Fahrzeug beispielsweise zu einer unautorisierten Tankstelle fahren und dort ohne Meldenachricht umweltbelastend betankt werden könnte. Gleichzeitig würde jedoch eine einseitige Meldung des Fahrzeugs über einen Betankungsvorgang (oder Entnahmevorgang bzw. Verbrauch) auch nicht ausreichend sein, da das Fahrzeug keine Kenntnis über die Herkunft des Kraftstoffes hat. Erfindungsgemäß müssen sowohl die Tankstelle oder ein Tankstellensystem als auch das Fahrzeug unabhängig voneinander einen Betankungsvorgang (bzw. das Fahrzeug alternativ einen Entnahmevorgang oder Verbrauch) an die Datenverarbeitungseinheit melden und die Datenverarbeitungseinheit muss dazu in der Lage sein, diese voneinander unabhängigen Meldenachrichten gegeneinander abzugleichen, z.B. miteinander zu korrelieren.

Durch das erfindungsgemäße Verfahren kann manipulationssicher bestimmt werden, ob das Kraftfahrzeug über seine gesamte Lebensdauer nur oder zumindest in einem hinreichenden Maß mit einem umweltschonenden Kraftstoff betankt bzw. betrieben wurde.

Der genannte Kennwert des Umwelteinflusses eines Kraftstoffes kann, für einen Kohlenstoff umfassenden Kraftstoff, beispielsweise als das bei der Verbrennung des Kraftstoffes freigesetzte $CO_2$ abzüglich eines biogenen Anteils von Kohlenstoff, der im Kraftstoff gebunden ist, definiert werden, wobei hier auch von einer $CO_2$-Bilanz gesprochen werden kann. Bei einem Kraftstoff wie Wasserstoff, der keinen Kohlenstoff umfasst, kann die $CO_2$-Bilanz beispielsweise als das bei der Herstellung des Kraftstoffes freigesetzte $CO_2$ herangezogen werden, sofern der Kraftstoff nicht durch erneuerbare Energien hergestellt wurde. Es versteht sich, dass dem Fachmann viele weitere und wesentlich genauere Definitionen für Kennwerte der $CO_2$-Bilanz bekannt sind. In einem Beispiel kann der Kennwert der $CO_2$-Bilanz des Kraftstoffs als Relativwert für den betankten Kraftstoff, z.B. X kg $CO_2$ pro kg Kraftstoff oder als Absolutwert für den betankten Kraftstoff, z.B. Y kg $CO_2$, angegeben werden. Es kann auch der Relativwert zusammen mit einer Menge des Kraftstoffs herangezogen werden. Weiters können beispielsweise auch $CO_2$-Äquivalente von Methanemissionen (oder anderen Emissionen) oder gesundheitsrelevante Kennwerte in den Kennwert des Umwelteinflusses einfließen.

Als Umwelteinfluss des Fahrzeugs wird hierin im Allgemeinen der Umwelteinfluss des Kraftstoffes angesehen, mit dem das Fahrzeug über seine Lebensdauer oder auch nur über einen vorbestimmten Zeitrahmen (z.B. während oder seit der letzten Betankung oder im letzten Monat) betankt bzw. betrieben wurde. Zusätzlich könnten auch andere Aspekte wie ein Wirkungsgrad des Fahrzeugmotors in die Bestimmung des Umwelteinflusses des Fahrzeugs einfließen, wobei dies für die vorliegende Erfindung jedoch nebensächlich ist.

Zur Umsetzung des erfindungsgemäßen Verfahrens bieten sich einige Varianten an. In einer ersten Variante, die insbesondere dann anwendbar ist, wenn die Sensoreinheit einen Betankungsvorgang erkennt, sendet beispielsweise eine Tankstelle die erste Meldenachricht aus, wobei die erste Meldenachricht die Angaben eines einzigen Betankungsvorganges enthält. Zumindest enthält die erste Meldenachricht die Menge und den Kennwert des Umwelteinflusses des Kraftstoffes oder die Identifikation der Herkunft des Kraftstoffes, mit dem die Betankung (z.B. tatsächlich) durchgeführt wurde. Hierbei umfasst das Verfahren den Schritt:

- in der Datenverarbeitungseinheit, Empfangen der ersten Meldenachricht und der zweiten Meldenachricht und, wenn die erste Meldenachricht mit der zweiten Meldenachricht korreliert und damit verifiziert werden konnte, Erstellen eines Dateneintrags umfassend die Fahrzeugidentifikation und den Kennwert des Umwelteinflusses des Kraftstoffes oder der Identifikation der Herkunft des Kraftstoffes.

Bei dieser Variante mit dem Korrelieren sind die erste Meldenachricht und die zweite Meldenachricht einem einzigen Betankungsvorgang zugehörig. Das Korrelieren kann z.B. über eine eindeutige Information erfolgen, die in beiden Meldenachrichten enthalten ist, z.B. über eine eindeutige Betankungsnummer. Die Korrelation könnte aber auch über eine Fahrzeugidentifikation erfolgen, die in beiden Nachrichten enthalten ist, wenn die beiden Meldenachrichten z.B. weiters einen im Wesentlichen übereinstimmenden Zeitstempel und/oder eine im Wesentlichen übereinstimmende Mengenangabe und/oder eine im Wesentlichen übereinstimmende Ortsposition wie eine GPS-Angabe umfassen.

In einer weiteren Variante könnte die erste Meldenachricht vom eigentlichen Betankungsvorgang entkoppelt werden, z.B. wenn der Benutzer im Vorhinein eine Betankung mit einer Menge X des Kraftstoffes Y bei einer Tankstelle oder einem Tankstellensystem zur Betankung reserviert, und/oder die zweite Meldenachricht könnte vom eigentlichen Betankungsvorgang entkoppelt werden, z.B. wenn die Sensoreinheit einen Entnahmevorgang oder einen Verbrauch misst. In dieser Variante misst die Sensoreinheit die Menge des betankten, entnommenen oder verbrauchten Kraftstoffes und die gemessene Menge wird in der zweiten Meldenachricht inkludiert. Der Schritt des Bestimmens des Umwelteinflusses des Fahrzeugs kann folglich die folgenden Schritte umfassen:

- Bestimmen eines ersten Umwelteinflusses auf Basis des in der zumindest einen ersten Meldenachricht angegebenen Kennwerts oder der Identifikation der Herkunft,
- Bestimmen des zusätzlichen Umwelteinflusses auf Basis einer Differenz aus einer Menge an Kraftstoff, die in der zweiten Meldenachricht angegeben ist, und der Menge an Kraftstoff, die in der ersten Meldenachricht angegeben ist (wobei dieser zusätzliche Umwelteinfluss auch Null sein kann, z.B. wenn in der zweiten Meldenachricht eine kleinere oder gleich große Menge an Kraftstoff angegeben ist wie in der bzw. den ersten Meldenachrichten),
- Bestimmen des Umwelteinflusses des Fahrzeugs als Summe des ersten Umwelteinflusses und des zusätzlichen Umwelteinflusses.

In diesem Verfahren gibt die erste Meldenachricht an, wie viel Kraftstoff für ein Fahrzeug reserviert wird. Da die zweite Meldenachricht die gemessene Menge an betankten, entnommenen oder verbrauchten Kraftstoff enthält, kann aus der Differenzmenge zwischen der in der zweiten Meldenachricht angegebenen Menge und der in einer oder mehreren ersten Nachrichten angegebenen Mengen an reserviertem Kraftstoff geschlossen werden, ob das Fahrzeug auch mit nicht reserviertem Kraftstoff betankt wurde, sodass hierfür ein "worst case" Umwelteinfluss angenommen werden kann.

In der letztgenannten Variante kann das Verfahren bevorzugt weiters den folgenden Schritt umfassen: Erstellen eines Dateneintrags umfassend den ersten Umwelteinfluss und den zusätzlichen Umwelteinfluss. Damit kann auch ein Umwelteinfluss von einer oder mehrerer Betankungen in einem Dateneintrag protokolliert werden. Im Gegensatz zur erstgenannten Variante wird ein Betankungsvorgang vorrangig durch die zweite Meldenachricht definiert.

Die Dateneinträge könnten aber auch allgemeiner definiert werden, z.B. könnte jede (erste und zweite) Meldenachricht als einzelner Dateneintrag hinterlegt werden, in welchem Fall das Verfahren die folgenden Schritte umfasst:

- in der Datenverarbeitungseinheit, Erstellen eines eigenen Dateneintrags für jede empfangene erste Meldenachricht und Erstellen eines eigenen Dateneintrags für jede empfangene zweite Meldenachricht.

Der Umwelteinfluss des Fahrzeugs könnte daraufhin auf Basis aller bzw. der letzten X Dateneinträge und/oder der Dateneinträge über einen gewünschten Zeitraum Y ermittelt werden.

Im Minimalfall kann der Umwelteinfluss des Fahrzeugs auf Grundlage einer einzigen Betankung ermittelt werden. Bevorzugt können aber auch mehrere Betankungsvorgänge analysiert werden und der Umwelteinfluss des Fahrzeugs auf Grundlage dieser mehreren Betankungsvorgänge ermittelt werden. In diesem Fall umfasst das Verfahren die Schritte:

- Senden einer weiteren zweiten Meldenachricht und Erstellens des Dateneintrags für zumindest einen weiteren Betankungsvorgang, Entnahmevorgang oder Verbrauch desselben Fahrzeugs, wobei alle Dateneinträge eines Fahrzeugs in einem gemeinsamen Datensatz gespeichert werden, und
- Bestimmen des Umwelteinflusses des Fahrzeugs auf Basis des Datensatzes mit zumindest zwei zu demselben Fahrzeug zugehörigen Dateneinträgen.

Bevorzugt findet das Verfahren über die gesamte Lebensdauer des Fahrzeugs statt, in welchem Fall die Schritte des Sendens der ersten Meldenachricht, des Sendens der zweiten Meldenachricht und des Erstellens des Dateneintrags für zumindest einen weiteren Betankungsvorgang ab einer ersten Inbetriebnahme des Fahrzeugs durchgeführt und für jeden Betankungsvorgang des Fahrzeugs wiederholt werden. Allgemeiner kann definiert werden, dass der Umwelteinfluss des Fahrzeugs auf Basis der über die gesamte Lebensdauer des Fahrzeugs empfangenen ersten und zweiten Meldenachrichten ermittelt wird.

Im letztgenannten Fall kann auch eine Lebenszyklus-Analyse durchgeführt werden, in welchem Fall der Schritt des Bestimmens des Umwelteinflusses des Fahrzeugs die folgenden Schritte umfasst:

- Bestimmen eines bei der Herstellung des Fahrzeuges entstandenen (Kennwerts eines) Umwelteinflusses, und
- Addieren des bei der Herstellung des Fahrzeuges entstandenen Umwelteinflusses und eines gemäß allen Dateneinträgen für dieses Fahrzeug durch den Kraftstoff entstandenen Umwelteinflusses bzw. allgemeiner des auf Basis der ersten und zweiten Meldenachrichten ermittelten Umwelteinflusses des Fahrzeugs.

Insbesondere kann mit dem erfindungsgemäßen Verfahren auch bestimmt werden, ob das Fahrzeug vorbestimmte Umweltkriterien erfüllt. Dies kann beispielsweise dadurch umgesetzt werden, dass der Umwelteinfluss des Fahrzeugs als Kennwert des Umwelteinflusses, insbesondere der $CO_2$-Bilanz des Kraftstoffs bestimmt wird, mit dem das Fahrzeug bei einem oder mehreren Betankungsvorgängen betankt wurde oder der vom Fahrzeug entnommen oder verbraucht wurde, wobei nach dem Schritt des Bestimmens des Umwelteinflusses des Fahrzeugs der folgende Schritt durchgeführt wird:

- Überprüfen, ob der Kennwert des Umwelteinflusses des betankten, entnommen oder verbrauchten Kraftstoffes unterhalb eines vorbestimmten Schwellwertes liegt.

Im vorgenannten Fall wird üblicherweise der zuletzt vorgenommene Betankungsvorgang überprüft. Es kann aber auch ein längerer Zeitraum überprüft werden, was beispielsweise mittels eines gewichteten Mittelwerts durchgeführt werden kann. Hierbei wird der Umwelteinfluss des Fahrzeugs als gewichteter Mittelwert des Kennwerts des Umwelteinflusses von zumindest zwei Kraftstoffen bestimmt wird, mit denen das Fahrzeug bei mehreren Betankungsvorgängen betankt wurde oder die vom Fahrzeug entnommen oder verbraucht wurden, wobei nach dem Schritt des Bestimmens des Umwelteinflusses des Fahrzeugs der folgende Schritt durchgeführt wird:

- Überprüfen, ob der gewichtete Mittelwert der des Kennwerts des Umwelteinflusses des betankten, entnommenen oder verbrauchten Kraftstoffes unterhalb eines vorbestimmten Schwellwertes liegt.

Der obige Schwellwert kann insbesondere beliebig gewählt werden und muss nicht mit einem bestimmten Kraftstoff in Korrelation stehen. Beispielsweise kann der Schwellwert derart festgelegt werden, dass ein Verhältnis von zwei Teilen Biomethan zu einem Teil fossilem Methan betankt werden darf. Dies kann mittels des gewichteten Schwellwerts über mehrere Betankungsvorgänge ermittelt werden oder aber auch nur bei einem Betankungsvorgang, wenn die Tankstelle ein Gemisch an Biomethan und fossilem Methan zur Verfügung stellt, das in der ersten Meldenachricht angegeben werden kann, z.B. als Kennwert der CO2-Bilanz dieses Gemischs.

Die vorgenannten Überprüfungen können beispielsweise dem Benutzer angezeigt werden, damit dieser ein Feedback über seinen Umwelteinfluss gegeben wird. Es könnten jedoch auch Sanktionen wie eine Maut basierend auf der Bestimmung des Umwelteinflusses gesetzt werden. Mittels des genannten Schwellwerts können aber auch technische Sanktionen gesetzt werden. In diesem Fall umfasst das Verfahren den Schritt:

- Senden einer Sperrnachricht von der Datenverarbeitungseinheit an eine Steuereinheit des Fahrzeugs, wenn der Schritt des Überprüfens ergab, dass der Kennwert des Umwelteinflusses oder der gewichtete Mittelwert des Kennwerts des Umwelteinflusses des betankten Kraftstoffs oberhalb eines vorbestimmten Schwellwertes liegt,

wobei das Fahrzeug nach Erhalt der Sperrnachricht nicht oder nur in einem Modus mit eingeschränkter Leistung weiterfahren kann.

Damit die Datenverarbeitungseinheit die beiden Meldenachrichten zuverlässig korrelieren kann, erfasst die betankende Tankstelle vor dem Senden der ersten Meldenachricht bevorzugt die Fahrzeugidentifikation des zu betankenden Fahrzeugs und inkludiert diese in der ersten Meldenachricht, wobei die Datenverarbeitungseinheit die erste Meldenachricht und die zweite Meldenachricht anhand der Fahrzeugidentifikation korreliert. Es sind jedoch alternative Korrelationen möglich, z.B. indem die Tankstelle und das Fahrzeug vor der Betankung eine eindeutige Identifikation des Betankungsvorganges austauschen.

Im erfindungsgemäßen Verfahren kann die Datenverarbeitungseinheit in einem Server vorliegen, wobei die Tankstelle einen Sendeempfänger aufweist, welcher die erste Meldenachricht an den Server sendet und wobei das Fahrzeug einen Sendeempfänger aufweist, welcher die zweite Meldenachricht an den Server sendet. Alternativ könnte die Datenverarbeitungseinheit am Fahrzeug vorliegen und die Tankstelle einen Sendeempfänger aufweist, welcher die erste Meldenachricht an einen mit der Datenverarbeitungseinheit verbundenen Sendeempfänger am Fahrzeug sendet, wobei die Datenverarbeitungseinheit in einem Secure Element vorliegen kann. Auch wäre es möglich, dass die Datenverarbeitungseinheit an der Tankstelle vorliegt. Die Varianten bringen unterschiedliche Vorteile mit sich. Wenn die Datenverarbeitungseinheit in einem Server vorliegt, liegt ein hohes Sicherheitslevel vor, da diese nicht physisch zugänglich ist. Wenn die Datenverarbeitungseinheit am Fahrzeug vorliegt, kann insbesondere eine fahrzeugautonome und datenschutzrechtlich unbedenkliche Bestimmung des Umwelteinflusses vorgenommen werden.

Wie oben erläutert sind bei dem erfindungsgemäßen Verfahren Sicherheitsbedenken von großer Relevanz, insbesondere da ein umweltbelastendes Betanken im Nachhinein nur schwer bestimmbar ist und große Auswirkungen auf die Umwelt haben kann. Es können daher mehrere Schritte gesetzt werden, um sicherzustellen, dass Benutzer das erfindungsgemäße Verfahren nicht umgehen können.

Um zu verhindern, dass ein Benutzer das Fahrzeug selbst unautorisiert betankt, könnte das Verfahren den folgenden Schritt umfassen:

- Ausgeben eines Alarmsignals, wenn die Datenverarbeitungseinheit eine zweite Meldenachricht erhält, zu der keine erste Meldenachricht vorliegt.

Weiters können die Meldenachrichten und/oder der bzw. die Dateneinträge oder der Datensatz auf einer Blockchain hinterlegt werden. Dies verhindert, dass Meldenachrichten und/oder Dateneinträge im Nachhinein manipuliert oder gelöscht werden können.

In einer bevorzugten Ausführungsform der Erfindung umfasst das Verfahren die Schritte:

- Hinterlegen eines Zertifikats in der Tankstelle oder im Fahrzeug, wobei das Zertifikat als Teil der ersten Meldenachricht oder zweiten Meldenachricht an die Datenverarbeitungseinheit gesandt wird; und

- Überprüfen der Authentizität des Zertifikats in der Datenverarbeitungseinheit vor dem Bestimmen des Umwelteinflusses des Fahrzeugs oder dem Erzeugen des Dateneintrags.

In den zwei vorstehenden Varianten mit dem ersten bzw. zweiten Zertifikat wird ein zusätzliches Sicherheitslevel gegen betrügerische Versuche zur Umgehung des Systems eingeführt. Konkret wird durch das Zertifikat verhindert, dass die Meldenachricht durch einen Betrüger "vorgetäuscht" wird, da der Betrüger nicht in Besitz eines authentischen Zertifikats sein wird. Zur Umsetzung des Zertifikats sind im Fachgebiet der Kryprographie viele Möglichkeiten bekannt. In einem Beispiel kann das jeweilige Zertifikat von einer unabhängigen Instanz vergeben werden und die zu überprüfende Einheit kann nach Erhalt der mit dem Zertifikat versehenen Nachricht bei der unabhängigen Instanz überprüfen lassen, ob das Zertifikat und damit die Nachricht authentisch ist.

Vorteilhafte und nicht einschränkende Ausführungsformen der Erfindung werden nachfolgend anhand der Figuren näher erläutert.

     Figur 1 zeigt eine erste Ausführungsform des erfindungsgemäßen Verfahrens.
     Figur 2 zeigt ein Flussdiagramm des erfindungsgemäßen Verfahrens.
     Figur 3 zeigt eine Zeitleiste mit mehreren Betankungsvorgängen.
     Figur 4 zeigt eine zweite Ausführungsform des erfindungsgemäßen Verfahrens.
     Figur 5 zeigt eine dritte Ausführungsform des erfindungsgemäßen Verfahrens.

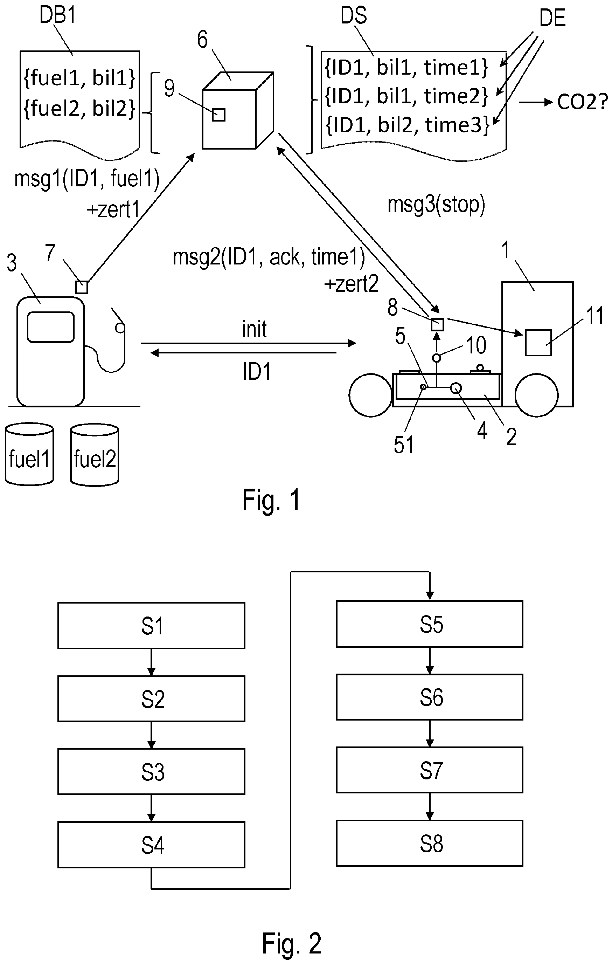

Figur 1 zeigt ein Fahrzeug 1 mit einem Fahrzeugtank 2, dem Kraftstoff über eine Tankstelle 3 zuführbar ist. Der Fahrzeugtank 2 umfasst in der Regel eine Einspeiseeinheit mit einer Befüllkupplung 4 und einer Befüllleitung 5, welche von der Befüllkupplung 4 zu einer Anschlussstelle 51 in den Fahrzeugtank 2 geführt ist. Über die Einspeiseeinheit kann Kraftstoff in den Fahrzeugtank 2 geführt werden. Das Fahrzeug 1 könnte beispielsweise wie dargestellt einen Tragrahmen und zwei Achsen aufweisen, wobei auf einer oder auf beiden Seiten des Tragrahmens zwischen den Achsen jeweils ein Fahrzeugtank 2 montiert sein kann. Das Fahrzeug 1 ist üblicherweise ein Straßenfahrzeug mit zumindest vier Rädern, könnte jedoch auch ein Zug, ein Flugzeug, ein Schiff, ein U-Boot oder dergleichen sein.

Der Fahrzeugtank 2 ist zur Lagerung von Fluid ausgelegt, z.B. Benzin, Diesel oder ähnlichem. In besonders relevanten Ausführungsformen der Erfindung ist der Fahrzeugtank 2 ein Kryobehälter zur Lagerung von Kryofluid, insbesondere LNG (Liquefied Natural Gas) oder Wasserstoff. Je nach Kryofluid ist der Kryobehälter 2 somit dazu ausgelegt, Kryofluid bei Temperaturen von beispielsweise unter 150 Kelvin, im Fall von Wasserstoff sogar von unter 50 Kelvin oder unter 30 Kelvin oder im Wesentlichen 20 Kelvin, zu lagern. Je nach Anwendung könnte der Kryobehälter 2 beispielsweise zur Lagerung von sLH2 (subcooled liquid hydrogen) oder CcH2 (cryo-compressed hydrogen) ausgebildet und damit auch für entsprechende hohe Drücke ausgelegt sein, z.B. für Maximaldrücke zwischen 1 bar und 350 bar.

In anderen Varianten könnte der Kraftstoff jedoch auch Strom sein. In diesem Fall wird statt einem Fahrzeugtank 2 eine Batterie vorgesehen. Im Allgemeinen können die Batterie und der Fahrzeugtank 2 als Energiespeicher aufgefasst werden. Wenn der Kraftstoff Strom ist, ist die Einspeiseeinheit z.B. ein Ladeanschluss (der gegebenenfalls eine induktive Ladung ermöglicht) der Batterie und entsprechende elektrische Leitungen zwischen dem Ladeanschluss und der Batterie. Die im Folgenden erläuterten Ausführungsformen werden für den Fall erläutert, dass der Kraftstoff ein Fluid ist, wobei diese Ausführungsformen jedoch auch für Strom als Kraftstoff umgesetzt werden können. Weiters werden im Folgenden die Begrifflichkeiten "tanken", "befüllen", "beladen", "entnehmen", "verbrauchen" etc. sowohl für Fluide als auch für Strom verwendet.

Als Hintergrund für die im Folgenden erläuterten Ausführungsformen sei erwähnt, dass die Herkunft des Kraftstoffes, der in den Energiespeicher befüllt bzw. beladen werden soll, für eine Einhaltung einer gewünschten $CO_2$-Bilanz eine wesentliche Rolle spielt. Dies sei am Beispiel von Biomethan und fossilem Methan beispielhaft erklärt. Biomethan und fossiles Methan sind in ihrer chemischen Zusammensetzung nicht unterscheidbar und können durch die chemische Formel $CH_4$ beschrieben werden Bei der Verbrennung von Methan ist aus der Reaktionsgleichung $CH_4 + 2*O_2 = CO_2 + 2*H_2O$ ersichtlich, dass sowohl Methan als auch Biomethan bei der Verbrennung dieselbe Menge an $CO_2$ freisetzen. Bei der $CO_2$-Bilanz ist jedoch hinzuzurechnen, dass während der Produktion und Verbrennung von Biomethan nur jenes $CO_2$ freigesetzt wird, das zuvor von den Pflanzen bei der Photosynthese aufgenommen wurde. Daher kann Biomethan als im Wesentlichen $CO_2$ neutral angesehen werden, fossiles Methan jedoch nicht.

Die oben erläuterten Grundsätze können aber auch auf andere Kraftstoffe angewandt werden. Im Falle von Wasserstoff H2 entsteht in einer Brennstoffzelle kein $CO_2$, sodass die Brennstoffzelle im Wesentlichen emissionsfrei arbeitet. Bei der Erstellung der $CO_2$-Bilanz muss jedoch der Ursprung des H2 mitberücksichtigt werden. In vielen Fällen wird Wasserstoff mittels Dampfreformierung aus fossilem Erdgas gewonnen, in welchem Fall eine große Menge an $CO_2$ freigesetzt wird, sodass auch Wasserstoff eine umweltbelastende $CO_2$-Bilanz aufweisen kann. In anderen Fällen wird Wasserstoff jedoch durch Solar- oder Windstrom produziert, in welchem Fall Wasserstoff als im Wesentlichen $CO_2$-

neutral oder zumindest weniger umweltbelastend als Wasserstoff in der vorgenannten Herstellungsmethode ist. Die gleichen Überlegungen treffen für Strom zu, da dieser beispielsweise aus Windkraft stammen kann, in welchem Fall sein Umwelteinfluss gering ist, oder aus der Verbrennung von Kohle, in welchem Fall sein Umwelteinfluss größer sein wird.

Um die vorstehenden Erläuterungen zusammenzufassen, beruht die vorliegende Erfindung darauf, dass der Kraftstofftyp nicht isoliert in seiner chemischen und/oder physikalischen Zusammensetzung betrachtet wird, sondern für eine umfassendere Beschreibung des Kraftstoffes auch seine Herkunft berücksichtigt wird. Es könnte daher beispielsweise eine erste Datenbank DB 1 bereitgestellt werden, die eine Kraftstoffidentifikation fuel1, fuel2 (dies könnte eine Seriennummer des Kraftstoffs sein oder schlichtweg ein gewählter Name wie "Biomethan") mit einer CO2-Bilanz bil1, bil2 des Kraftstoffes verknüpft. Anstatt der CO2-Bilanz kann euch ein äquivalenter Richtwert (beispielsweise eine CO2-Bilanz zuzüglich CO2-Äquivalente von Methanemissionen) oder schlichtweg eine binäre Kennzeichnung "ja"/ "nein" herangezogen werden, wobei "ja" eine CO2-Bilanz unter einem vorbestimmten Schwellwert und damit einen umweltschonenden Kraftstoff kennzeichnet und "nein" eine CO2-Bilanz über einem vorbestimmten Schwellwert und damit einen umweltbelastenden Kraftstoff kennzeichnet. Alle diese Kennungen werden als "Kennwerte eines Umwelteinflusses" angesehen.

Die im Folgenden beschriebenen Ausführungsformen sollen nun dazu dienen, um zu bestimmen, welchen Umwelteinfluss das Fahrzeug auf die Umwelt ausübt bzw. ausgeübt hat. Wie aus dem obenstehenden hervorgeht, ist für diese Frage insbesondere die Herkunft des betankten Kraftstoffes relevant. Wenn das Fahrzeug beispielsweise über seine gesamte Lebensdauer nur mit Biomethan betankt wurde, versteht sich, dass der Umwelteinfluss des Fahrzeuges geringer sein wird, als wenn das Fahrzeug mit fossilem Methan betankt wurde.

Um diesen Umwelteinfluss des Fahrzeugs zu bestimmen, wird gemäß Figur 1 vorgesehen, dass sowohl eine Tankstelle 3 als auch das Fahrzeug 1 eine Betankung an eine Datenverarbeitungseinheit 9 meldet (in weiter unten beschriebenen Ausführungsformen könnte das Fahrzeug auch einen Verbrauch oder einen Entnahmevorgang detektierten und diesen entsprechen melden). Dies dient unter anderem dazu, dass betrügerische Meldungsversuche ausgeschlossen oder zumindest erheblich erschwert werden. Konkret sendet die Tankstelle 3 eine erste Meldenachricht an eine Datenverarbeitungseinheit 9 und das Fahrzeug 1 sendet eine zweite Meldenachricht an die Datenverarbeitungseinheit 9.

Im Beispiel von Figur 1 wird weiters ein externer Server 6 bereitgestellt, in dem die Datenverarbeitungseinheit 9 vorliegt. Der Server 6 bzw. die Datenverarbeitungseinheit 9 kommuniziert einerseits mit einem Sendeempfänger 7 der Tankstelle 3 und andererseits mit einem Sendeempfänger 8 des Fahrzeugs 1. Zur einfacheren Erläuterung wird im Allgemeinen davon gesprochen, dass der Server 6 bzw. die Datenverarbeitungseinheit 9 mit der Tankstelle 3 bzw. dem Fahrzeug 1 kommuniziert, wobei darunter eine Kommunikation mit dem jeweiligen Sendeempfänger 7, 8 verstanden wird.

In einem eingangs stattfindenden Initialisierungsschritt kann vorgesehen werden, dass die Tankstelle 3 vor dem Start einer Betankung eine eindeutige Identifikation ID1 des Fahrzeugs 1 erhält, z.B. indem ein Zapfhahn der Tankstelle 3 zur Befüllkupplung 4 des Fahrzeugs geführt wird, um an dieser Stelle eine Kurzreichweitenkommunikation, z.B. mittels RFID, durchzuführen. Beispielsweise kann die Tankstelle 3 in einem ersten Schritt S1, dargestellt in Figur 2, eine Anfrage an das Fahrzeug 1 senden und das Fahrzeug kann in einem zweiten Schritt S2 seine Identifikation ID1 an die Tankstelle 3 übermitteln. Alternativ könnte die Tankstelle 3 auch ein Kennzeichen des Fahrzeugs 1 optisch erfassen. Es sind daher viele Optionen möglich, wie die Tankstelle 3 die Identifikation ID1 des Fahrzeugs 1 erhalten kann.

Wie in Figur 1 dargestellt könnte die Tankstelle 3 mehrere Kraftstoffe fuel1, fuel2 lagern, die insbesondere wie oben erläutert eine gleiche chemische Zusammensetzung, aber eine unterschiedliche CO2-Bilanz (bzw. im Allgemeinen einen unterschiedlichen Umwelteinfluss) aufweisen. Der Benutzer des Fahrzeugs 1 oder der Benutzer der Tankstelle 3 kann in einem Schritt S3 wählen, ob das Fahrzeug 1 mit dem ersten Kraftstoff fuel 1 oder mit dem zweiten Kraftstoff fuel2 betankt werden soll. Der Benutzer des Fahrzeugs 1 könnte aber auch auswählen, dass z.B. eine Betankung mit 50 % des ersten Kraftstoffs fuel1 und 50 % zweiten Kraftstoffs fuel2 stattfinden soll. Selbstverständlich könnte die Tankstelle 3 auch Kraftstoffe mit unterschiedlicher chemischer Zusammensetzung aufweisen, wobei dies in der vorliegenden Erfindung nebensächlich ist und davon ausgegangen wird, dass den Fahrzeug 1 ein Kraftstoff mit einer für ihn geeigneten Zusammensetzung zugeführt wird.

Vor dem Start der Betankung oder während der Betankung des Fahrzeugs 1 mit der Identifikation ID1 mit dem Kraftstoff fuel1 sendet die Tankstelle 3 nun in einem Schritt S4 eine erste Meldenachricht an den Server 6, wobei die erste Meldenachricht die Identifikation ID1 des Fahrzeugs 1 und die Information über den gewünschten Kraftstoff fuel 1 enthält. In Figur 1 wird diese Anfragenachricht daher als msg(ID1, fuel1) bezeichnet. Es wäre möglich, dass diese Anfragenachricht auch weitere Informationen enthält, beispielsweise die Menge des betankten Kraftstoffes und/oder einen Zeitstempel der Betankung. Wie weiter unten erläutert könnte die Anfragenachricht aber auch weniger bzw. andere Informationen beinhalten.

Damit das Betanken für dieses Fahrzeug 1 vom Fahrzeug 1 selbst verifizierbar ist, umfasst dieses eine Sensoreinheit 10, die einen Betankungsvorgang durch die zumindest eine Tankstelle 3 erkennt. In anderen Ausführungsformen, die am Ende dieser Beschreibung erläutert werden, könnte die Sensoreinheit 10 aber auch einen Entnahmevorgang oder einen Verbrauch detektieren. Für die weiteren Erläuterungen wird jedoch vorerst davon ausgegangen, dass die Sensoreinheit 10 einen Betankungsvorgang erkennt, wobei alle Varianten auch auf andere Sensoreinheiten 10 umlegbar sind.

Die Sensoreinheit 10 ist bevorzugt dazu ausgebildet, einen Fluidstrom (oder Stromfluss, wenn der Kraftstoff Strom ist) durch die Einspeiseeinheit, insbesondere die Befüllkupplung 4 oder die Befüllleitung 5, zu erkennen, in welchem Fall die Sensoreinheit 10 z.B. ein Massenstromzähler sein kann. Dies hat auch den Vorteil, dass diese Sensoreinheit 10 die Masse bzw. das Volumen des betankten Kraftstoffes bestimmen kann. Dies kann auch dadurch erzielt werden, indem die Sensoreinheit 10 als Füllstandssensor im Fahrzeugtank 2 ausgebildet wird. Über elektrische Mittel könnte auch die Menge an elektrischem Kraftstoff z.B. in kWh gemessen werden. Ein Ansteigen des Fluidlevels im Fahrzeugtank durch den Füllstandssensor oder eine Änderung des Ladegrads der Batterie kann als Betankungsvorgang interpretiert werden. In einfacheren Fällen könnte eine mechanische Vorrichtung aber auch das Einführen einer Zapfpistole als Betankungsvorgang interpretieren. In diesem Fall wird der Betankungsvorgang nur mittelbar detektiert und es kann insbesondere kein Massenstrom gemessen werden. Es können auch Messdaten von mehreren Sensoren kombiniert werden, um einen Betankungsvorgang zu detektieren.

Sobald die genannte Sensoreinheit 10 einen Betankungsvorgang erkennt, wird im Schritt S5 eine zweite Meldenachricht an die Datenverarbeitungseinheit 9 gesandt. Wie in Figur 1 dargestellt ist, kann die zweite Meldeeinheit beispielsweise die Identifikation ID1 des Fahrzeugs 1 umfassen, eine Bestätigung "ack" der Sensoreinheit 10, dass ein Betankungsvorgang stattfindet oder stattgefunden hat, und einen Zeitstempel time1 der Betankung.

Die Datenverarbeitungseinheit 9 kann eine erste Meldenachricht und eine zweite Meldenachricht korrelieren, beispielsweise wenn die sowohl die erste Meldenachricht als auch die zweite Meldenachricht die Identifikation ID des Fahrzeugs 1 enthalten. Zusätzliche oder alternative Korrelationsschritte können dadurch gegeben sein, dass in den Schritten S1, S2 eine eindeutige Kennzeichnung des Betankungsvorgangs zwischen dem Fahrzeug 1 und der Tankstelle 3 ausgetauscht wird, mittels welcher die Datenverarbeitungseinheit 9 die beiden Meldenachrichten korrelieren kann. Auch könnten die beiden Meldenachrichten einen Zeitstempel umfassen. Zeitstempel können als korreliert angesehen werden, wenn diese innerhalb eines vorbestimmten Zeitfensters (z.B. 30 Sekunden oder 60 Sekunden) liegen. Auch könnten die Mengen bzw. Volumen des betankten Fluids in den Meldenachrichten enthalten sein, über welche eine Korrelation erfolgen kann. Weiters könnte eine Korrelation über GPS-Koordinaten, gegebenenfalls in Kombination mit einem Zeitstempel, erfolgen.

Sobald die Datenverarbeitungseinheit 9 die erste Meldenachricht und die zweite Meldenachricht empfangen hat und diese korrelieren konnte, erstellt diese im Schritt S6 einen Dateneintrag DE, der zumindest die Fahrzeugidentifikation ID und den Kennwert des Umwelteinflusses des Kraftstoffes oder die Identifikation der Herkunft des Kraftstoffes umfasst. Der Dateneintrag DE kann auch andere Einträge wie einen Zeitstempel time1 oder eine Menge des befüllten Kraftstoffes aufweisen, wobei dies jedoch nicht zwingend ist.

Es sei hervorgehoben, dass die Datenverarbeitungseinheit 9 den Dateneintrag DE erst erstellt, wenn sowohl die erste Meldenachricht als auch die zweite Meldenachricht empfangen wurden. Wird nur eine Meldenachricht empfangen, zu der keine andere Meldenachricht zugehörig ist, kann ein Alarmsignal ausgegeben werden, wie weiter unten spezifiziert wird.

In anderen Varianten kann die Datenverarbeitungseinheit 9 jedoch auch einen Dateneintrag DE erstellen, wenn eine erste Meldenachricht empfangen wurde und einen weiteren Dateneintrag DE erstellen, wenn die zweite Meldenachricht empfangen wurde, d.h. es wird für jede erste und/oder zweite Meldenachricht ein eigener Dateneintrag DE erstellt. Dies ist insbesondere für jene Varianten sinnvoll, bei denen die Sensoreinheit 10 einen Entnahmevorgang oder Verbrauch misst, oder bei denen die ersten und/oder zweiten Meldenachrichten von einem tatsächlichen Betankungsvorgang entkoppelt sind (siehe unten).

Der Dateneintrag DE kann beispielsweise in einer internen Datenbank der Datenverarbeitungseinheit 9 hinterlegt werden, die nur durch autorisierte Benutzer auslesbar ist. Alternativ könnte die interne Datenbank auch öffentlich zugänglich sein oder der Dateneintrag DE wird an eine externen Datenbank gesandt. In weiteren Varianten kann der Dateneintrag DE auch auf einer Blockchain hinterlegt werden.

Sobald die Datenverarbeitungseinheit 9 zumindest einen Dateneintrag DE erstellt hat, kann in einem Schritt S7 der Umwelteinfluss des Fahrzeugs 1 bestimmt werden. Wenn aus dem Dateneintrag DE beispielsweise hervorgeht, dass während des letzten Betankungsvorgangs Biomethan getankt wurde, kann im Schritt S7 ausgegeben werden, dass das Fahrzeug zumindest in der jüngsten Vergangenheit CO2-neutral betrieben wurde. Wenn aus dem Dateneintrag DE jedoch hervorgeht, dass während des letzten Betankungsvorgangs fossiles Methan betankt wurde, kann der ausgegebene Umwelteinfluss auch der Kennwert der CO2-Bilanz oder allgemeiner der Kennwert des Umwelteinflusses des Kraftstoffes sein.

Insbesondere kann in der Datenverarbeitungseinheit 9 auch die vorgenannte erste Datenbank DB 1 hinterlegt sein, in welcher der Kennwert des Umwelteinflusses bil1 des Kraftstoffs fuel1 ausgewiesen ist. In einem Schritt kann S5 in der Datenverarbeitungseinheit 9 somit bestimmt werden, welchen Kennwert des Umwelteinfluss, z.B. welche CO2-Bilanz, der Kraftstoff fuel 1 aufweist. Wenn die erste Meldenachricht somit die Kennung fuel 1 des Kraftstoffes erhält, kann die Datenverarbeitungseinheit 9 mittels der ersten Datenbank im Schritt S2 unmittelbar den Kennwert des Umwelteinflusses bil1 im Dateneintrag DE hinterlegen oder alternativ könnte im Schritt S7, falls dies bei der Bestimmung des Umwelteinflusses des Fahrzeugs 1 notwendig ist, die erste Datenbank DB1 herangezogen werden, um die Kennung des Kraftstoffes in einen Kennwert des Umwelteinflusses bil1 umzurechnen. In wieder anderen Fällen könnte die erste Meldenachricht den Kennwert des Umwelteinflusses unmittelbar umfassen.

In den vorgenannten Ausführungen wurde davon ausgegangen, dass ein einziger Betankungsvorgang stattgefunden hat, sodass eine einzige erste Meldenachricht und eine einzige zweite Meldenachricht vorlagen, die zu einem einzigen Dateneintrag verknüpft wurden. Es wird somit der Umwelteinflusses des Fahrzeugs 1 auf Basis eines einzigen Betankungsvorgangs bestimmt.

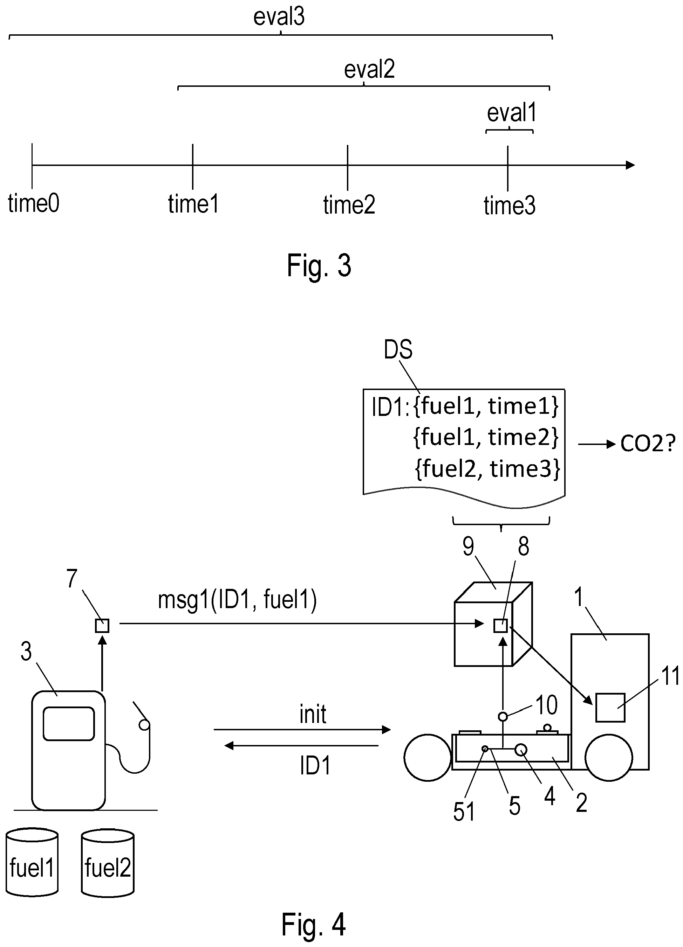

Figur 3 zeigt einen Zeitstrahl, bei dem die Zeit time0 den Zeitpunkt der Herstellung des Fahrzeugs kennzeichnet. An den Zeitpunkten time1, time2, time 3 fanden jeweils Betankungsvorgänge statt. Es ist ersichtlich, dass die Bestimmung eval3 nur jenen Betankungsvorgang betrifft, der zum Zeitpunkt time3 durchgeführt wurde.

Dasselbe Verfahren der Schritte S4-S6 kann nun jedoch für zumindest einen weiteren Betankungsvorgang wiederholt werden. Im Folgenden wird davon ausgegangen, dass dasselbe Fahrzeug 1 mit der Identifikation ID1 den Betankungsvorgang durchführt. Wie unten erläutert könnte das Verfahren auch für ein zweites Fahrzeug mit der Identifikation ID2 (oder im Allgemeinen viele andere Fahrzeuge 1) durchgeführt werden.

Wenn das Fahrzeug 1 mit der Identifikation ID1 z.B. zu einem zweitem Zeitpunkt time2 einen weiteren Betankungsvorgang startet, werden abermals eine erste Meldenachricht und eine zweite Meldenachricht an die Datenverarbeitungseinheit 9 gesandt, die daraufhin einen zweiten Dateneintrag DE erzeugt, der wiederum zumindest die Fahrzeugidentifikation ID und den Kennwert des Umwelteinflusses des Kraftstoffes oder die Identifikation der Herkunft des Kraftstoffes umfasst.

Wenn zwei Dateneinträge DE zur selben Fahrzeugidentifikation ID1 vorliegen, werden diese in einem gemeinsamen Datensatz DS gespeichert. Alternativ könnten auch alle Dateneinträge von unterschiedlichen Fahrzeugidentifikationen ID1, ID2, ... zu einem Datensatz DS gespeichert werden.

Aus dem Beispiel von Figur 1 ist ersichtlich, dass ein Datensatz DS vorliegt, in dem drei Betankungsvorgänge für dasselbe Fahrzeug 1 mit der Identifikation ID1 aufgezeichnet wurden, die zu drei unterschiedlichen Zeitpunkten time1, time2, time3 durchgeführt wurden. Der erste und der zweite Betankungsvorgang wurden mit dem ersten Kraftstoff fuel 1 und der dritte Betankungsvorgang wurde mit dem zweiten Kraftstoff fuel2 durchgeführt. Dieser zeitliche Ablauf der drei Betankungsvorgänge ist auch aus Figur 3 ersichtlich.

Wenn nun ein Datensatz DS mit zumindest zwei Dateneinträgen DE zum selben Fahrzeug 1 vorliegt, kann das Bestimmen des Umwelteinflusses des Fahrzeugs auf Basis dieses Datensatzes DS erfolgen. Beispielsweise können die letzten X Betankungsvorgänge, die Betankungsvorgänge der letzten Y Tage und/oder Betankungsvorgänge mit Kraftstoffen mit einer Gesamtmenge Z (z.B. 10 $m^3$ oder 1000 kg Kraftstoff) herangezogen werden. Von jedem dieser Betankungsvorgänge kann der Kennwert des Umwelteinflusses bil1, bil2 herangezogen werden und es kann ein Mittelwert, bevorzugt ein gewichteter Mittelwert, bestimmt werden, der als Umwelteinfluss des Fahrzeugs 1 herangezogen wird. In Figur 3 könnte beispielswiese eine Bestimmung des Umwelteinflusses nur auf Basis der beiden Betankungsvorgänge zu den Zeitpunkten time2, time3 erfolgen.

Insbesondere ermöglicht der Datensatz DS jedoch, dass alle Betankungsvorgänge seit der ersten Inbetriebnahme des Fahrzeugs im Datensatz aufgezeichnet werden, indem die Schritte S4-S6 bei jedem Betankungsvorgang wiederholt werden. Dadurch können alle Betankungsvorgänge über die gesamte Lebensdauer aufgezeichnet werden, wodurch der Umwelteinfluss des Fahrzeugs 1 über dessen gesamte Lebensdauer bestimmbar ist. Im Schritt des Bestimmens des Umwelteinflusses des Fahrzeugs 1 werden somit alle für ein Fahrzeug 1 aufgezeichneten Dateneinträge DE herangezogen und ausgewertet. Auch hier kann beispielsweise ein Mittelwert, bevorzugt ein gewichteter Mittelwert, bestimmt werden, der als Umwelteinfluss des Fahrzeugs 1 herangezogen wird. In Figur 3 erfolgt die Bestimmung eval2 des Umwelteinflusses des Fahrzeugs 1 seit dessen erster Inbetriebnahme beispielsweise über die drei Betankungsvorgänge, die zu den Zeitpunkten time1, time2, time3 stattgefunden haben.

Wenn für ein Fahrzeug 1 alle Betankungsvorgänge über seine Lebensdauer aufgezeichnet werden, kann überdies eine sogenannte Lebenszyklus-Analyse ("Lifecycle Analysis") des Fahrzeugs durchgeführt werden. Hierbei wird eingangs ermittelt, wie viel aus nicht erneuerbaren Quellen stammendes CO2 (mit oder ohne CO2-Äquivalenten) bei der Herstellung des Fahrzeugs 1 zum Zeitpunkt time0 freigesetzt wurde. Ausgehend von diesem Startwert kann der wie oben ermittelte Umwelteinfluss des Fahrzeugs hinzuaddiert werden. In einem idealisierten Fall wurde das Fahrzeug nur mit einem Kraftstoff betankt, der zu 100% aus erneuerbaren Quellen stammt, in welchem Fall die Umweltbelastung nach der Lebensdauer nur dem genannten Startwert entspricht. Im ungünstigsten Fall wurde das Fahrzeug nur mit fossilen Kraftstoffen betankt, sodass der insgesamte Umwelteinfluss dem Startwert plus das durch den Kraftstoff freigesetzte CO2 entspricht. In Figur 3 ist diese Bestimmung der Lebenszyklus-Analyse mit eval3 bezeichnet.

Wie oben erwähnt kann der Datensatz DS nur die Dateneinträge DE eines einzigen Fahrzeugs 1 mit der Identifikation ID1 umfassen. In diesem Fall wird ein eigener Datensatz DS pro Fahrzeug erstellt. In einem anderen Fall kann der Datensatz DS aber auch Dateneinträge DE von unterschiedlichen Fahrzeugen 1 umfassen. In diesem Fall werden beim Bestimmen des Umwelteinflusses im Schritt S6 eines Fahrzeugs 1 vorab nur jene Dateneinträge DE aus den Datensatz DS abgerufen, die zu diesem Fahrzeug 1 mit der Identifikation ID1 zugehörig sind.

In allen vorgenannten Varianten können dem Schritt S7 des Bestimmens des Umwelteinflusses noch weitere Schritte folgen, wie z.B. ein Überprüfen, ob der Kennwert des Umwelteinflusses (oder der gewichtete Mittelwert des Kennwerts des Umwelteinflusses) des betankten Kraftstoffes unterhalb eines vorbestimmten Schwellwertes liegt. Wenn dies der Fall ist, kann im Schritt S7 eine Sperrnachricht von der Datenverarbeitungseinheit 9 an eine Steuereinheit 11 des Fahrzeugs 1 gesandt werden. Das Fahrzeug kann derart ausgebildet sein, dass es nach Erhalt der Sperrnachricht nicht oder nur in einem Modus mit eingeschränkter Leistung weiterfahren kann. Üblicherweise wird die Sperrnachricht hierzu über den Sendeempfänger 8 an eine Fahrzeugelektronik gesandt, die z.B. einen Motorstart verhindert oder das Betreiben des Motors mit zu hoher Leistung unterbindet. In Figur 1 ist die Sperrnachricht mit msg3(stop) dargestellt.

Für die oben genannten Zwecke kann eine zweite Datenbank im Server 6 vorliegen, in welcher den mit der Identifikation ID1, ID2 gekennzeichneten Fahrzeugen 1 ein maximaler Umwelteinfluss bil_max1, bil_max2, z.B. eine maximale CO2-Bilanz, zugewiesen ist, die den genannten Schwellwert bildet. Die Schwellwerte können je nach Fahrzeug 1 unterschiedlich sein. Beispielsweise könnten Möglichkeiten verwirklicht sein, dass beispielsweise Personenkraftwagen strengeren oder weniger strengeren Beschränkungen hinsichtlich des maximalen Umwelteinflusses einhalten sollen als Lastfahrzeuge oder sicherheitskritische Fahrzeuge wie Polizeifahrzeuge, Feuerwehrfahrzeuge oder Rettungswagen. In anderen Worten könnte die Identifikation ID1 einer Gruppe von Fahrzeugen zugeordnet sein, die einen entsprechenden maximalen Umwelteinfluss bil_max1 nicht überschreiten soll. Eine weitere oder alternative Gruppenbildung könnte nach dem Gewicht des Fahrzeugs vorgenommen werden, wobei schwerere Fahrzeuge oder ältere Fahrzeuge mit einem umweltschonenderen maximalen Umwelteinfluss betankt werden dürfen als entsprechend leichtere oder jüngere Fahrzeuge.

Das oben erläuterte Verfahren des Korrelierens der zwei Meldenachrichten bzw. der Algorithmus zur Bestimmung des Umwelteinflusses kann durch einige weitere Maßnahmen noch sicherer vor Manipulationen und Betrugsversuchen geschützt werden, wie im Folgenden ausgeführt wird. Beispielsweise könnten die erste Meldenachricht und/oder die zweite Meldenachricht mit einem Zertifikat zert1, zert2 versehen werden, das nur von einer übergeordneten Instanz vergeben wird und fälschungssicher ist.

Um beispielsweise zu verhindern, dass eine Tankstelle 3 vortäuscht, dass sie einen Kraftstoff fuel1 mit einem Umwelteinfluss bil1 betanken wird, obwohl der Tankstelle nur ein Kraftstoff fuel2 mit einem höheren Umwelteinfluss bil2 zur Verfügung steht, kann das genannte Zertifikat zert1 nur an bestimmte Tankstellen 3 vergeben werden. Eine von dieser Tankstelle 3 abgesandte erste Meldenachricht kann nun dieses Zertifikat zert1 umfassen. Der Server 6 bzw. die Datenverarbeitungseinheit 9 prüft nach dem Empfang der ersten Meldenachricht, ob diese das erste Zertifikat zert1 umfasst und erzeugt den genannten Dateneintrag DE nur, wenn die erste Meldenachricht das Zertifikat zert1 umfasst.

Weiters könnte verhindert werden, dass die zweite Meldenachricht gefälscht wird, z.B. indem ein Zertifikat zert2 im Fahrzeug 1 vorgesehen wird. Eine vom Fahrzeug 1 abgesandte zweite Meldenachricht kann nun dieses Zertifikat zert2 umfassen. Der Server 6 bzw. die Datenverarbeitungseinheit 9 prüft nach dem Empfang der zweiten Meldenachricht, ob diese das zweite Zertifikat zert2 umfasst und erzeugt den genannten Dateneintrag DE nur, wenn die zweite Meldenachricht das Zertifikat zert2 umfasst.

An der Tankstelle 3 und/oder im Fahrzeug 1 könnte beispielsweise jeweils ein Secure Element vorliegen, das die erste Meldenachricht und/oder die zweite Meldenachricht erzeugt. In diesem Secure Element könnte auch das jeweilige Zertifikat zert1, zert2 hinterlegt sein.

Unter einem Secure Element wird hierin eine manipulationssichere physische Komponente verstanden (in der Regel ein sicherer Ein-Chip-Mikrocontroller), die in der Lage ist, Anwendungen sicher zu hosten, beispielsweise gemäß Regeln und Sicherheitsanforderungen, die von einer vertrauenswürdigen Stelle festgelegt wurden.

Figur 4 zeigt eine weitere Ausführungsform, die alternativ zur Ausführungsform von Figur 1 ohne externen Server 6 betrieben wird. Hierbei liegt die Datenverarbeitungseinheit 9 unmittelbar am Fahrzeug 1 vor. Sofern im Folgenden keine gegenteiligen Aussagen getroffen werden, können alle Aspekte und Varianten von Figur 1 auch auf die Ausführungsform von Figur 4 übertragen werden.

Auch im Verfahren von Figur 4 kann zuerst ein optionaler Initialisierungsablauf mit den oben erläuterten Schritten S1, S2 stattfinden. Hierbei dient die Initialisierung vorrangig dazu, dass die Tankstelle 3 eine Adresse des Fahrzeugs 1 erhält, an welche die erste Meldenachricht gesandt werden kann.

Danach kann wieder wie oben spezifiziert optional ein Kraftstoff fuel 1 im Schritt S3 gewählt werden, wonach die erste Meldenachricht im Schritt S4 von der Tankstelle 3 an die Datenverarbeitungseinheit 9 am Fahrzeug 1 gesandt wird (wobei dies üblicherweise durch eine kabellose Kommunikation erfolgt), wobei die erste Meldenachricht die Angaben zum Kraftstoffs fuel1 enthält. Nach dem Beginn der Betankung wird durch die Sensoreinheit 10 ein Betankungsvorgang festgestellt, wonach wie oben erläutert im Schritt S5 die zweite Meldenachricht an die Datenverarbeitungseinheit 9 gesandt wird.

Wenn die Datenverarbeitungseinheit 9 sowohl die erste Meldenachricht als auch die zweite Meldenachricht empfangen hat, kann diese wiederum den Dateneintrag DE erzeugen. Alle zu Figur 1 erläuterten Optionen, insbesondere hinsichtlich des Bestimmens des Umwelteinflusses des Fahrzeugs 1 auf Basis des genannten Dateneintrags DE, des Datensatzes DS und des Sendens der Sperrnachricht sind auch bei dem Verfahren von Figur 4 anwendbar.

Bei dem Verfahren von Figur 4 wird jedoch üblicherweise vorgesehen, dass jeder Datensatz DS für jedes Fahrzeug 1 gesondert geführt wird. In diesen Fällen muss die Identifikation ID1 nicht Teil jedes Dateneintrags DE sein, sondern die Identifikation ID1 wird implizit durch diesen Datensatz DS vorgegeben, wie in Figur 4 durch den Eintrag "ID1:" dargestellt ist. Dies könnte auch bei Figur 1 vorgesehen werden, wenn für jedes Fahrzeug 1 ein eigener Datensatz DS geführt wird.

Es ist ersichtlich, dass die Ausführungsform der Figur 4 zwar in einem oberflächlichen Sicherheitslevel ein korrektes Bestimmen des Umwelteinflusses ermöglicht, die weiterhin zwei Meldenachrichten durch die Datenverarbeitungseinheit 9 korreliert werden müssen, bevor ein Dateneintrag DE erzeugt wird. Da jedoch alle Komponenten frei zugänglich sind und insbesondere die sicherheitskritische Datenverarbeitungseinheit 9 nicht auf dem entfernten Server 6 vorliegt, werden üblicherweise weitere Vorkehrungen getroffen, um das Sicherheitslevel zu erhöhen.

Einerseits kann auch bei der Ausführungsform von Figur 4 vorgesehen werden, das genannte erste Zertifikat zert1 an der Tankstelle 3 vorzusehen. Eine von dieser Tankstelle 3 abgesandte erste Meldenachricht kann nun dieses Zertifikat zert1 umfassen. Die Datenverarbeitungseinheit 9 prüft nach dem Empfang der ersten Meldenachricht, ob diese das Zertifikat zert1 umfasst und startet das Erzeugen des Dateneintrags DE nur, wenn die erste Meldenachricht das Zertifikat zert1 umfasst.

Insbesondere kann die Datenverarbeitungseinheit 9 in einem sogenannten Secure Element vorliegen. Es wird auf die obige Definition des Secure Elements verwiesen.

Da die Datenverarbeitungseinheit 9 in einem Secure Element vorliegt, kann der Algorithmus zum Authentifizieren des ersten Zertifikats und oder der Algorithmus zum Erzeugen des Dateneintrags DE nicht von außen beeinflusst werden. In anderen Worten gibt es durch das Secure Element keine Möglichkeit, die genannten Algorithmen zu manipulieren oder zu umgehen.

Das Secure Element mit der Datenverarbeitungseinheit 9 ist bevorzugt integraler Bestandteil der Sensoreinheit 10 und beispielsweise unlösbar mit dieser verbunden. Dadurch kann die zweite Meldenachricht unmittelbar auf kabelgebundenem Weg (oder auch über einen integrierten Schaltkreis) an die Datenverarbeitungseinheit 9 gesandt werden. Falls erforderlich könnte die zweite Meldenachricht auch kabellos übertragen werden.

An dieser Stelle sei noch darauf eingegangen, was passiert, wenn ein Fehler im Verfahren der Schritte S1-S8 vorliegt. Beispielsweise könnte die Datenverarbeitungseinheit 9 nur eine der beiden Meldenachrichten erhalten. Dies kann insbesondere dann vorkommen, wenn der Benutzer das Fahrzeug bei einer nicht autorisierten Tankstelle betankt, die keine erste Meldenachricht senden will oder kann. Weiters könnte die Datenverarbeitungseinheit 9 feststellen, dass die erste Meldenachricht und/oder die zweite Meldenachricht kein oder kein gültiges erstes bzw. zweites Zertifikat zert1, zert2 aufweist. In all diesen Fällen könnte die Datenverarbeitungseinheit ein Alarmsignal ausgeben, das z.B. einem Kontrollorgan weitergeleitet wird, damit die Vorgänge des Fahrzeugs 1 überprüft werden können. Das Alarmsignal könnte auch an das Fahrzeug 1 gesandt werden, damit dort z.B. ein optisches Signal angezeigt wird. Durch das Leuchten des optischen Signals kann angezeigt werden, dass Betrugsversuche bei dem Fahrzeug 1 stattgefunden haben.

Weiters sei an dieser Stelle festgehalten, dass eine Kommunikation zwischen Tankstelle 3 und Fahrzeug 1 bevorzugt über eine Kurzreichweitenkommunikation wie RFID stattfindet, wobei dies jedoch nicht zwingend ist. Es könnte beispielsweise auch eine Kommunikation über ein zelluläres Mobilfunknetz oder das Internet erfolgen. Im Allgemeinen ist diese Kommunikation bevorzugt über Funk, d.h. kabellos, wobei die Kommunikation auch über entsprechende Kontakte an der Zapfpistole und dem Befüllstutzen 4 kabelgebunden erfolgen kann. Eine Kommunikation des Servers 6 und der Tankstelle 3 bzw. dem Fahrzeug 1 erfolgt bevorzugt über ein zelluläres Mobilfunknetz oder das Internet.

Aus den Figuren 1 und 3 ist weiters ersichtlich, dass die Tankstelle 3 den ersten Kraftstoff fuel 1 und den zweiten Kraftstoff fuel2 physisch getrennt voneinander lagern kann, d.h. es werden an der Tankstelle auch zwei gesonderte Zapfhähne vorgesehen, wobei ein Zapfhahn nur den ersten Kraftstoff fuel 1 ausgibt und der andere Zapfhahn nur den zweiten Kraftstoff fuel2 ausgibt. Die erste Meldenachricht wird hierbei auf Basis eines Messsignal eines Massenstromzählers erzeugt, der die Ausgabe des jeweiligen Kraftstoffes fuel1, fuel2 misst. In einem derartigen System können besondere Sicherheitsvorkehrungen vorgesehen werden, z.B. kann die Einspeiseeinheit des genannten Fahrzeugs 1, das nur umweltschonend tanken soll, eine speziell ausgeführte Befüllkupplung 4 aufweist, in welche der erste Zapfhahn einführbar ist, aber nicht der zweite Zapfhahn. Bei Legacy-Fahrzeugen, welche auch umweltbelastend tanken können, kann eine Legacy-Befüllkupplung 4 vorgesehen sein, wobei sowohl der erste Zapfhahn als auch der zweite Zapfhahn in die Legacy-Befüllkupplung 4 einführbar sind. Diese Ausführungen sind jedoch keinesfalls zwingend.

In der Praxis verhält es sich bei einigen Tankstellen 3 derart, dass diese die genannten Kraftstoffe fuel1, fuel2 mit der gleichen chemischen Zusammensetzung aber unterschiedlichen $CO_2$-Bilanz geliefert bekommen und in einem einzigen Speicher (oder mehreren Speichern) als Gemisch lagern. Hierbei kann in der Tankstelle 3 eine interne Buchhaltung über Herkunftszertifikate (d.h. andere Zertifikate als die genannten Zertifikate zert1, zert2 zur Überprüfung der Authentizität der Meldenachrichten) führen, um sicherzustellen, dass nicht mehr umweltfreundlicher Kraftstoff an Fahrzeuge 1 abgegeben wird, als der Tankstelle 3 tatsächlich zur Verfügung steht. Diese Herkunftszertifikate können der ersten Meldenachricht angehängt sein und in der Datenverarbeitungseinheit 9 zum späteren Nachweis abrufbar gespeichert werden. Global betrachtet beeinflusst dies die Bestimmung des Umwelteinflusses des Fahrzeugs 1 jedoch nicht, da einfach davon ausgegangen wird, dass die Tankstelle nur den gewünschten Kraftstoff fuel 1, fuel2 abgegeben hat.

In wieder anderen Varianten können Tankstellen 3 vorgesehen werden, die nur vorbestimmte Kraftstoffe lagern, bevorzugt nur einen einzigen Kraftstoff, z.B. einen umweltfreundlichen Kraftstoff mit einem niedrigen Kennwert des Umwelteinflusses. Wenn die zweite Meldenachricht eine aktuelle Positionsangabe wie einen GPS-Fix umfasst, kann in der Datenverarbeitungseinheit 9 überprüft werden, ob es plausibel ist, dass der in der ersten Meldenachricht ausgewiesene Kraftstoff fuel1, fuel2 an dem Ort der Betankung auch tatsächlich betankt wurde. Hierfür kann die Datenverarbeitungseinheit 9 beispielsweise auf eine weitere Datenbank zugreifen, in der einem Tankstellenort der dort zur Verfügung stehende Kraftstoff fuel1, fuel2 zugewiesen ist.

Als weitere Sicherheitsstufen können in dem beschriebenem System Massenbilanzen über die Tankstelle 3 und/oder über das Fahrzeug gezogen werden. Um eine Massenbilanz über die Tankstelle 3 zu ziehen, können die folgenden Verfahrensschritte durchgeführt werden:

- Ermitteln der Mengen von an die Tankstelle 3 zugeführten Kraftsoffen und vergleichen, gegebenenfalls mittels der in der Datenverarbeitungseinheit 9 hinterlegten Dateneinträge DE, ob die an Fahrzeuge 1 abgegebene Menge an Kraftstoffen mit der an die Tankstelle zugeführten Menge an Kraftstoffen übereinstimmt, wobei zwischen Kraftstoffen mit gleicher chemischer Zusammensetzung aber unterschiedlicher $CO_2$-Bilanz unterschieden wird.

Mit diesen Verfahrensschritten kann überprüft werden, ob die Tankstelle 3 tatsächlich nur so viel umweltfreundlichen Kraftstoff ausgibt, wie sie erhalten hat.

Um eine Massenbilanz über das Fahrzeug 1 zu ziehen, können die folgenden Verfahrensschritte durchgeführt werden:

- Schätzen einer Menge von Kraftstoff, die vom Fahrzeug 1 verbraucht wurde, wobei das Schätzen anhand einer vom Fahrzeug gefahrenen Wegstrecke durchgeführt wird, und vergleichen, ob diese geschätzte Menge an Kraftstoff mit einer Menge an getankten Kraftstoff übereinstimmt, die in den Dateneinträgen DE ausgewiesen ist.

In dieser Variante wird die erste Meldenachricht und/oder die zweite Meldenachricht die getankte Menge an Kraftstoff umfassen. Durch die Massenbilanz über das Fahrzeug kann überprüft bzw. plausibilisiert werden, ob tatsächlich alle Dateneinträge DE vorliegen, um mathematisch auf die vom Fahrzeug gefahrene Wegstrecke zu kommen. Ist dies nicht der Fall, muss davon ausgegangen werden, dass das Fahrzeug 1 Betankungsvorgänge nicht gemeldet hat und die Sensoreinheit 10 dabei umgangen werden konnte.

Wie oben erläutert dienen die hier beschriebenen Verfahren dazu, einen Umwelteinfluss eines Fahrzeugs zu bestimmen, d.h. es wird ein Messverfahren für diese Fahrzeuge geschaffen. In der Folge kann dies dazu beispielsweise über die genannte Sperrnachricht dazu ausgenutzt werden, um Fahrzeuge fahruntüchtig zu machen, die z.B. über einen langen Zeitraum nur mit umweltbelastendem Kraftstoff getankt haben (oder wie oben beschrieben mit der Summe an betankten Kraftstoffen bestimmte Schwellwerte überschritten haben). Neben der genannten Sanktion, dass die Fahrzeuge fahruntüchtig gemacht werden, können bei einer ungerechtfertigten umweltbelastenden Betankung auch andere Sanktionen erhoben werden, wie z.B. das Einheben einer Maut auf Basis des Umwelteinflusses des Fahrzeugs.

In allen oben ausgeführten Ausführungsformen diente die zweite Meldenachricht im Wesentlichen als Verifizierung der ersten Meldenachricht. Weiters wurde die erste Meldenachricht von der Tankstelle 3 ausgesandt, sobald diese einen Betankungsvorgang initiierte. Im einfachsten Fall kann die zweite Meldenachricht ein "ok" umfassen. Wenn die zweite Meldenachricht mit der ersten Meldenachricht korreliert werden konnte, wird dies als Verifizierung der ersten Meldenachricht aufgefasst.

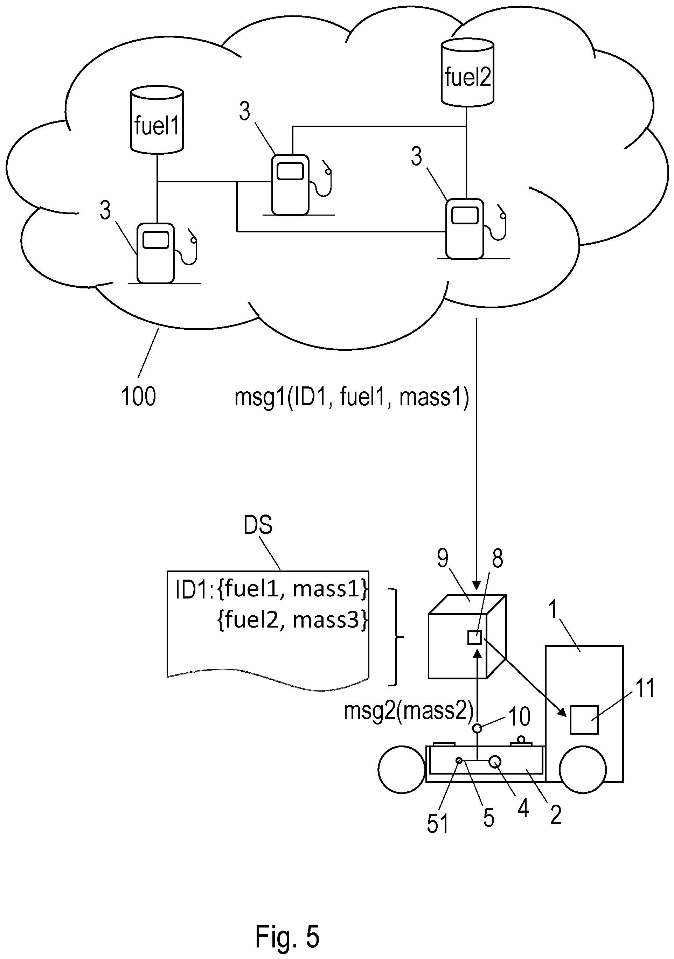

Figur 5 zeigt eine weitere Ausführungsform zum Bestimmen des Umwelteinflusses des Fahrzeugs 1. Im Gegensatz zu den oben erläuterten Ausführungsformen wird bei der Variante von Figur 5 die Meldenachricht nicht zur Verifizierung eines Betankungsvorganges der Tankstelle herangezogen, sondern als eigenständige Basisinformation zur Ermittlung des Umwelteinflusses, wie im Folgenden ausführt wird.

Aus Figur 5 ist ersichtlich, dass ein Tankstellensystem 100 einer Bereitstellung von Kraftstoff betrachtet wird. In dieses Tankstellensystem 100 kann beispielsweise ein erster Kraftstoff fluid1 eingebracht werden und ein zweiter Kraftstoff fluid2. Wie oben beschrieben können diese Kraftstoffe fluid1, fluid2 unterschiedliche Kennwerte der Umweltbelastung aufweisen. In einem derartigen Tankstellensystem 100 erfolgt jedoch keine strikte Trennung der Kraftstoffe fluid1, fluid2, da diese wie oben beschrieben eine gleiche chemische Zusammensetzung aufweisen können oder als Strom gleichwertig anzusehen sind. Eine Tankstelle 3 muss somit jedenfalls nicht wissen, ob sie nun tatsächlich mit dem Kraftstoff fluid 1 oder mit dem Kraftstoff fluid2 betankt wurde. Es ist jedoch wichtig festzuhalten, dass dennoch wohlbekannt ist, wie viel Kraftstoff fluid 1 und wieviel Kraftstoff fluid2 sich in diesem Tankstellensystem 100 befindet. In anderen Worten kann nicht mehr umweltschonender Kraftstoff fluid 1 aus diesem Tankstellensystem 100 entnommen werden, als in dieses eingebracht wird.

Wenn ein Benutzer nun wünscht, dass sein Fahrzeug 1 mit einem umweltschonendem Kraftstoff fuel 1 betankt wird, kann er dieses bei einer Tankstelle 3 oder auch beim Tankstellensystem 100 (z.B. online über eine Plattform) erwerben bzw. reservieren. Beispielsweise reserviert der Benutzer des Fahrzeugs 1 20 Liter des Kraftstoffes fuel1. Für das Tankstellensystem 100 betrachtet bedeutet dies, dass dieses um 20 Liter weniger des Kraftstoffes fuel1 umfasst. In der Folge wird es den Benutzern auch nur möglich sein, so viele Anteile des ersten Kraftstoffes fuel1 zu erwerben, wie in das Tankstellensystem 100 eingebracht wurde.

Es sei angemerkt, dass statt dem Tankstellensystem 100 auch eine einzige Tankstelle 3 betrachtet werden kann, die z.B. weiß, wie viel Kraftstoff fuel 1 und wie viel Kraftstoff fuel2 ihr zur Verfügung steht. Hier kann ermöglicht werden, dass Benutzer so viel Kraftstoff fuel 1 bei dieser Tankstelle 3 reservieren kann, wie dieser zugeführt wurden.

In einem ersten Verfahrensschritt wählt der Benutzer somit aus, mit welchem Kraftstoff er sein Fahrzeug 1 betankten möchte. Im Allgemeinen könnte der Benutzer auch wählen, dass das Fahrzeug 1 anteilig mit mehreren Kraftsoffen betankt werden soll, z.B. mit einer 50/50 Mischung aus dem ersten Kraftstoff fuel 1 und den zweiten Kraftstoff fuel2. Nachdem der Benutzer den Kraftstoff fuel 1 und die Menge zur Betankung ausgewählt hat, sendet das Tankstellensystem 100 (oder auch die Tankstelle 3, an welcher der Benutzer das Fahrzeug 1 tatsächlich betanken will) eine erste Meldenachricht an die Datenverarbeitungseinrichtung 9. Die erste Meldenachricht umfasst die zu betankende oder betankte Menge an Kraftstoff (wodurch auch ermöglicht wird, dass der Benutzer schlichtweg "volltanken" kann und abschließend die Menge bestimmt wird; alternativ könnten bei einem Betankungsvorgang auch inkrementell erste Meldenachrichten erzeugt werden, z.B. nach jedem Liter) und einen Kennwert eines Umwelteinflusses, insbesondere eine CO2-Bilanz, des gewählten Kraftstoffes oder eine Identifikation der Herkunft des gewählten Kraftstoffes. In einem Beispiel lautet die erste Meldenachricht: "20 Liter Biomethan wird für das Fahrzeug mit der Kennzeichnung ID1 bereitgestellt".

Um den Umwelteinfluss des Fahrzeugs 1 festzustellen, erkennt die Sensoreinheit 10 abermals einen Betankungsvorgang. In der Variante der Figur 5 erkennt die Sensoreinheit 10 aber jedenfalls auch die Menge des betankten Kraftstoffes. Nachdem die Sensoreinheit 10 eine Betankung erkannt hat, sendet diese eine zweite Meldenachricht an die Datenverarbeitungseinheit 9. Die zweite Meldenachricht umfasst jedenfalls die durch die Sensoreinheit 10 erkannte Menge an betanktem Kraftstoff. In einem Beispiel lautet die zweite Meldenachricht: "30 Liter Kraftstoff wurde in das Fahrzeug mit der Kennzeichnung ID1 betankt".

Sobald die Datenverarbeitungseinheit 9 die erste Meldenachricht und die zweite Meldenachricht empfangen hat, kann diese den Umwelteinfluss des Fahrzeugs 1 bestimmen. Die erste Meldenachricht wird hierbei herangezogen, um einen ersten Umwelteinfluss zu ermitteln und die zweite Meldenachricht wird herangezogen, um einen zusätzlichen Umwelteinfluss zu ermitteln.

In einem Beispiel ermittelt die Datenverarbeitungseinheit 9 zuerst einen ersten Umwelteinfluss auf Basis des in der zumindest einen ersten Meldenachricht angegebenen Kennwerts des Umwelteinflusses oder der Identifikation der Herkunft. Für die erste Meldenachricht "20 Liter Biomethan wird für das Fahrzeug mit der Kennzeichnung ID1 bereitgestellt" ist der Umwelteinfluss die CO2-Bilanz von 20 Liter Biomethan. Im Optimalfall ist dieser Umwelteinfluss "Null".

Danach ermittelt die Datenverarbeitungseinheit 9 die Differenz aus der Menge an Kraftstoff, die in der zweiten Meldenachricht angegeben ist, und der Menge an Kraftstoff, die in der ersten Meldenachricht angegeben ist. In anderen Worten wird ermittelt, wie viel Kraftstoff das Fahrzeug 1 getankt hat, das im Tankstellensystem 100 nicht als umweltschonender Kraftstoff ausgewiesen war. Diese Differenzmenge kann ein fiktiver Umwelteinfluss zugeschrieben werden, wie z.B. ein "worst case" Umwelteinfluss. In einem Beispiel wird der fiktive Umwelteinfluss als Äquivalent eines fossilen Kraftstoffs herangezogen, mit dem das Fahrzeug 1 betankbar ist. In obigen Beispiel, in dem die zweite Meldenachricht "30 Liter Kraftstoff wurde in das Fahrzeug mit der Kennzeichnung ID1 betankt" lautet, ist die Differenzmenge 10 Liter. Da die Datenverarbeitungseinheit 9 jedoch nicht weiß, aus welcher Quelle die 10 Liter Kraftstoff stammen, geht diese davon aus, dass es sich um fossiles Methan handelt, und der Umwelteinfluss dieser Differenzmenge wird bestimmt. Es wird hierbei von einem "zusätzlichen Umwelteinfluss" gesprochen.

In Figur 5 ist weiters ersichtlich, dass die erste Meldenachricht msg1 eine Menge mass1 des ersten Kraftstoffes fuel1 spezifiziert. Tatsächlich misst die Sensoreinheit 10 jedoch einen Betankungsvorgang mit einer Menge mass2. In der Folge wird ein Dateneintrag DE erzeugt, in welchem dem Kraftstoff fuel1 die Menge mass 1 zugeordnet ist und einem "fiktiven" Kraftsoff fuel2 mit einem "worst case" Umwelteinfluss die Differenzmenge

$$mass3 = mass2 - mass1.$$

Der gesamte Umwelteinfluss des Fahrzeugs auf Basis der ersten Meldenachricht und der zweiten Meldenachricht ermittelt sich somit aus der Summe des erstgenannten Umwelteinflusses, der aus der ersten Meldenachricht ermittelt wurde, und des zusätzlichen Umwelteinflusses, der aus der genannten Differenzmenge ermittelt wurde. In obigem Beispiel entspricht der Umwelteinfluss des Fahrzeugs dem Umwelteinfluss von 10 Liter fossilem Methan, da den 20 Liter Biomethan in diesem Beispiel kein Umwelteinfluss zugeschrieben wurde.

In diesem Beispiel kann auch gesehen werden, dass die erste Meldenachricht nicht unbedingt synchron zu einem tatsächlichen Betankungsvorgang stattfinden muss. Beispielsweise kann sich der Benutzer am Anfang eines Monats eine gewisse Menge an umweltschonendem Kraftstoff vom Tankstellensystem 100 reservieren. Wenn der Benutzer weniger als die reservierte Menge an Kraftstoff tankt, d.h. wenn die in den zweiten Meldenachrichten angegebenen Mengen geringer sind als die in den ersten Meldenachrichten angegebenen Mengen, kann dies bei der Ermittlung des Umwelteinflusses berücksichtigt werden.

Weiter ist zu den obigen Ausführungen anzumerken, dass der Benutzer natürlich nicht nur umweltschonenden Kraftstoff reservieren kann, sondern auch umweltbelastenden Kraftstoff, damit die Summe der Mengen aus den ersten Meldenachrichten und den zweiten Meldenachrichten gleich ist.

Aus dem obigen Beispiel ist ersichtlich, dass viele erste Meldenachrichten (z.B. eine erste Meldenachricht pro Reservierung im Tankstellensystem 100 oder Bezahlung bei der Tankstelle 3) und viele zweite Meldenachrichten (z.B. eine pro erkanntem Betankungsvorgang) an die Datenverarbeitungseinheit 9 gesandt werden.

Auch in dieser Variante der Figur 5 können Dateneinträge DE erzeugt werden, die jeweils z.B. den ersten Umwelteinfluss (gemäß der ersten Meldenachricht) und den zusätzlichen Umwelteinfluss umfassen. Die Dateneinträge benötigen jedoch keine genauen Formvorschriften und können wiederum eine Fahrzeugidentifikation und den Kennwert des Umwelteinflusses des in der ersten Meldenachricht ausgewiesenen Kraftstoffes oder der Identifikation der Herkunft des in der ersten Meldenachricht ausgewiesenen Kraftstoffes sowie den Kennwert des Umwelteinflusses des fiktiven Kraftstoffes der Differenzmenge umfassen. In einem Fall könnte der Dateneintrag DE einen ersten Teileintrag aufweisen, der für den Kraftstoff der ersten Meldenachricht wie der Dateneintrag DE der Variante der Figuren 1 bis 4 strukturiert ist, sowie einen zweiten Teileintrag aufweisen, der für den fiktiven Kraftstoff der Differenzmenge wie der Dateneintrag DE der Variante der Figuren 1 bis 4 strukturiert ist.

In einem anderen Fall, wenn die erste Meldenachricht das Reservieren eines Kraftstoffs mit einer Menge anzeigt, die größer ist als die in der zweiten Meldenachricht spezifizierte tatsächlich getankte Menge, kann ein erster Umwelteinfluss auf Basis der tatsächlich getankten Menge und des in der ersten Meldenachricht spezifizierten Kraftstoffs ermittelt werden (es kann auch davon gesprochen werden, dass zumindest ein Teil der ersten Meldenachricht verifiziert wird). Danach kann ein nächster Betankungsvorgang stattfinden, ohne dass sich der Benutzer weiteren Kraftstoff reserviert, in welchem Fall abermals eine zweite Meldenachricht vorliegen wird. Es kann nun ein zweiter Umwelteinfluss bestimmt werden, wobei die "Restmenge" der ersten Meldenachricht mitberücksichtigt wird. Die Restmenge der ersten Meldenachricht entspricht hierbei der in der ersten Meldenachricht angegebenen Menge abzüglich der Menge, die in der zweiten Meldenachricht angegeben ist. Aus diesen Beispielen ist insbesondere ersichtlich, dass die erste und zweite Meldenachricht nicht korreliert werden müssen, sodass die ersten und zweiten Meldenachrichten auch "asynchron" betrachtet werden können. Die Dateneinträge DE könnten wieder wie oben spezifiziert als Paar aus zumindest einem Teil einer ersten Meldenachricht und zumindest einem Teil einer zweiten Meldenachricht angesehen werden, oder die Dateneinträge DE könnten die ersten oder zweiten Meldenachrichten selbst sein. In beiden Fällen kann der Umwelteinfluss aus der Summe der Dateneinträge ermittelt werden.

In dieser Art und Weise kann wiederum ein Datensatz DS erzeugt werden, der mehrere Dateneinträge DE umfasst, die aus mehreren ersten Meldenachrichten und mehreren zweiten Meldenachrichten entstammen.

Da die ersten und zweiten Meldenachrichten jedoch nicht synchron zu einem Betankungsvorgang einlangen, kann vorgesehen werden, dass die Dateneinträge DE zu beliebigen Zeitpunkten erstellt werden, gegebenenfalls auch unter Berücksichtigung mehrerer erster Meldenachrichten und/oder mehrerer zweiter Meldenachrichten. Beispielsweise können die Dateneinträge periodisch erstellt werden oder auch nur zu einem Überprüfungszeitpunkt, an dem der Schritt Bestimmen des Umwelteinflusses des Fahrzeugs durchgeführt wird.

Sobald zumindest ein Dateneintrag DE oder der Datensatz DS vorliegt, können alle oben für die Figuren 1 bis 4 beschriebenen Varianten auch beim Verfahren von Figur 5 umgesetzt werden. Insbesondere können die Schritte des Sendens der ersten Meldenachricht, des Sendens der zweiten Meldenachricht und des Erstellens des Dateneintrags für zumindest einen weiteren Betankungsvorgang ab einer ersten Inbetriebnahme des Fahrzeugs durchgeführt und für jeden Betankungsvorgang des Fahrzeugs wiederholt werden und gegebenenfalls eine Lebenszyklus-Analyse durchgeführt werden. Weiters können die oben angeführten Schwellwertvergleiche durchgeführt werden, und gegebenenfalls kann nach überschreiten des Schwellwerts ein Sperrsignal an das Fahrzeug gesandt werden, wobei das Fahrzeug nach Erhalt der Sperrnachricht nicht oder nur in einem Modus mit eingeschränkter Leistung weiterfahren kann.

In der Variante der Figur 5 wird jedoch üblicherweise nicht vorgesehen, dass ein Alarmsignal ausgegeben wird, wenn die Datenverarbeitungseinheit eine zweite Meldenachricht erhält, zu der keine erste Meldenachricht vorliegt, da wie oben angegeben das Fehlen einer zweiten Meldenachricht Betankung eines Kraftstoffes mit einem "worst case" Umwelteinfluss angesehen wird.

In der Variante der Figur 5 ist dargestellt, dass die Datenverarbeitungseinheit 9 am Fahrzeug 1 vorliegt. Analog zu Figur 1 könnte die Datenverarbeitungseinheit 9 jedoch auch in einem Server 6 vorliegen. Die für die Figuren 1 bis 3 erläuterten Zertifikate zert1, zert2 bzw. die Einbettung der Datenverarbeitungseinheit 9 in ein Secure Element könnten auch bei Figur 4 vorgesehen werden.

In allen oben beschriebenen Ausführungsformen wurde davon ausgegangen, dass die Sensoreinheit 10 einen Betankungsvorgang erkennt. Es könnte aber auch vorgesehen werden, dass die Sensoreinheit 10 einen Entnahmevorgang oder einen Verbrauch erkennt, wie im Folgenden ausgeführt ist.

Wenn die Sensoreinheit 10 einen Entnahmevorgang erkennen soll, kann die Sensoreinheit 10 beispielsweise dazu ausgebildet sein, einen Fluidstrom (oder Stromfluss, wenn der Kraftstoff Strom ist) durch eine Entnahmeleitung zu erkennen, über welche der Kraftstoff aus dem Energiespeicher entnommen wird, in welchem Fall die Sensoreinheit 10 z.B. ein Massenstromzähler sein kann. Auch hier kann die Sensoreinheit 10 die Masse bzw. das Volumen des entnommenen Kraftstoffes bestimmen. Zur Bestimmung der Entnahme könnte die Sensoreinheit 10 jedoch auch als Füllstandsensor im Fahrzeugtank 2 ausgebildet sein. Über elektrische Mittel könnte auch die Menge an elektrischem Kraftstoff z.B. in kWh gemessen werden. Ein Absenken des Fluidlevels im Fahrzeugtank durch den Füllstandsensor oder eine Änderung des Ladegrads der Batterie kann als Entnahmevorgang interpretiert werden.

Wenn die Sensoreinheit 10 den Verbrauch bestimmen soll, kann die Sensoreinheit 10 beispielsweise ein Ventil einer Einspritzdüse sein, wobei der Öffnungsgrad des Ventils den Verbrauch definiert. Im vorliegenden Fall wird unter einer Bestimmung des Verbrauchs insbesondere verstanden, dass eine Entnahmeleitung an den Energiespeicher angeschlossen und zu einem Verbraucher wie einem Motor oder einer Brennstoffzelle geführt ist. Dadurch kann der Verbraucher mit dem im Energiespeicher gelagerten Kraftstoff betrieben werden (dies kann insbesondere auch dann vorgesehen werden, wenn die Sensoreinheit 10 einen Entnahmevorgang erkennen soll). In modernen Verbrauchern sind bereits entsprechende Sensoreinheiten 10 umfasst, die einen entsprechenden Verbrauch bestimmen und auch während des Betriebs ausgeben können.

Wenn die Sensoreinheit 10 einen Entnahmevorgang oder einen Verbrauch des Kraftstoffs erkennt, wird diese in der Regel auch eine zugehörige entnommene oder verbrauchte Menge messen und in der zweiten Meldenachricht inkludieren. Alle oben hinsichtlich der Figuren 1 bis 5 erläuterten Ausführungsformen sind auch dann anwendbar, wenn die Sensoreinheit 10 den Entnahmevorgang oder Verbrauch erkennt, mit dem Unterschied, dass der in der ersten Meldenachricht angegebene Kraftstoff, der tatsächlich betankt wurde oder für eine Betankung reserviert wurde, mit dem verbrauchten oder entnommenen Kraftstoff verglichen wird, um den Umwelteinfluss zu bestimmen.

In einem Beispiel meldet die Tankstelle wie für Figur 1 oder das Gesamtsystem 100 wie in Figur 5 beschrieben, dass 20 Liter des Kraftstoffes fuel1 betankt bzw. reserviert werden. Zu einem ersten Zeitpunkt misst die Sensoreinheit 10, dass 10 Liter an Kraftstoff entnommen oder verbraucht wurden, und meldet dies mittels einer zweiten Meldenachricht. Für diese Entnahme bzw. für diesen Verbrauch kann der Umwelteinfluss des Fahrzeuges 1 als 10 Liter des Kraftstoffes fuel1 bestimmt werden, d.h. die erste Meldenachricht kann mit dieser Teilmenge verifiziert werden. Danach kann die Sensoreinheit 10 z.B. messen, dass abermals 10 Liter an Kraftstoff entnommen oder verbraucht wurden, und dies in der zweiten Meldenachricht inkludieren, sodass die erste Meldenachricht insgesamt verifiziert werden kann und der Umwelteinfluss als nochmals 10 Liter bzw. insgesamt 20 Liter des Kraftstoffs fuel1 bestimmt werden kann. Misst die Sensoreinheit 10 eine weitere Entnahme bzw. einen weiteren Verbrauch von z.B. weiteren 10 Liter, kann dies in einer weiteren zweiten Meldenachricht inkludiert werden. Da für diese weitere Menge jedoch keine erste Meldenachricht mehr zur Verfügung steht, wird ein zusätzlicher Umwelteinfluss über einen fiktiven Kraftstoff mit einem "worst case" Umwelteinfluss ermittelt.

An dieser Stelle sei festgehalten, dass es selbstverständlich möglich ist, das oben genannte Verfahren beliebig zu verfeinern. Beispielsweise könnte ein Verlust von Kraftstoff detektiert werden, da beispielsweise eine elektrische Batterie bei Nichtbenutzung an Ladestand verliert oder da Kryofluid bei einem längeren Stillstand des Fahrzeugs 1 verdampft und an die Umwelt abgegeben wird. Der Verlust könnte detektiert werden, indem der Füllstand nach dem Abstellen des Fahrzeugs 1 und vor dem Inbetriebnehmen des Fahrzeugs 1 gemessen wird, oder indem eine weitere Sensoreinheit in einer nicht mit einem Verbraucher in Verbindung stehenden Leitung wie einer Boil-Off-Leitung vorliegt. Wenn der Kraftstoff beispielsweise Methan ist, würde dieses nach der Verbrennung als $CO_2$ an die Umwelt abgegeben werden und über ein Austreten an der Boil-Off-Leitung als Methan an die Umwelt abgegeben werden, was einen größeren Umwelteinfluss als bei der Verbrennung bewirkt. Dieser Unterschied kann wie oben spezifiziert detektiert und bei der Bestimmung des Umwelteinflusses des Fahrzeugs 1 entsprechend berücksichtigt werden. In anderen Worten könnte die weitere Sensoreinheit einen Verlust des Kraftstoffs detektieren, wobei der Verlust in einer zweiten Meldenachricht inkludiert oder als dritte Meldenachricht an die Datenverarbeitungseinheit 9 gesandt werden kann, die so den Verlust bei der Bestimmung des Umwelteinflusses des Fahrzeugs 1 mitberücksichtigen kann.

**Patentansprüche**

1. Verfahren zur Bestimmung eines Umwelteinflusses eines Fahrzeugs (1) in einem System umfassend das Fahrzeug (1) und eine Datenverarbeitungseinheit (9), wobei das Fahrzeug (1) einen Energiespeicher, insbesondere einen Fahrzeugtank (2) zur Lagerung von fluidem Kraftstoff, und eine Sensoreinheit (10) aufweist, die einen Betankungsvorgang, einen Entnahmevorgang oder einen Verbrauch des Kraftstoffs erkennt, wobei das Verfahren die folgenden Schritte umfasst:

   - Auswählen eines gewünschten Kraftstoffs und Senden einer ersten Meldenachricht an die Datenverarbeitungseinheit (9), wobei die erste Meldenachricht eine betankte oder zu betankende Menge an Kraftstoff und einen Kennwert eines Umwelteinflusses, insbesondere eine CO2-Bilanz, des gewählten Kraftstoffes oder eine Identifikation der Herkunft des gewählten Kraftstoffes umfasst,
   - im Fahrzeug (1), wenn die Sensoreinheit (10) einen Betankungsvorgang, einen Entnahmevorgang oder einen Verbrauch des Kraftstoffs erkennt, Senden einer zweiten Meldenachricht an die Datenverarbeitungseinheit (9),
   - Bestimmen des Umwelteinflusses des Fahrzeugs (1) auf Basis der in der ersten Meldenachricht angegebenen Informationen, wobei die zweite Meldenachricht bevorzugt zur Verifizierung der ersten Meldenachricht oder zur Ermittlung eines zusätzlichen Umwelteinflusses herangezogen wird.

2. Verfahren nach Anspruch 1, umfassend den Schritt:

   - in der Datenverarbeitungseinheit (9), Empfangen der ersten Meldenachricht und der zweiten Meldenachricht und, wenn die erste Meldenachricht mit der zweiten Meldenachricht korreliert und damit verifiziert werden konnte, Erstellen eines Dateneintrags (DE) umfassend die Fahrzeugidentifikation und den Kennwert des Umwelteinflusses des Kraftstoffes oder der Identifikation der Herkunft des Kraftstoffes.

3. Verfahren nach Anspruch 1, wobei die Sensoreinheit (10) die Menge des betankten, entnommenen oder verbrauchten Kraftstoffes misst und die gemessene Menge in der zweiten Meldenachricht umfasst ist, wobei der Schritt des Bestimmens des Umwelteinflusses des Fahrzeugs (1) die folgenden Schritte umfasst:

   - Bestimmen eines ersten Umwelteinflusses auf Basis des in der zumindest einen ersten Meldenachricht angegebenen Kennwerts oder der Identifikation der Herkunft,
   - Bestimmen des zusätzlichen Umwelteinflusses auf Basis einer Differenz aus einer Menge an Kraftstoff, die in der zweiten Meldenachricht angegeben ist, und der Menge an Kraftstoff, die in der ersten Meldenachricht angegeben ist,
   - Bestimmen des Umwelteinflusses des Fahrzeugs als Summe des ersten Umwelteinflusses und des zusätzlichen Umwelteinflusses,

   wobei das Verfahren bevorzugt weiters den folgenden Schritt umfasst:

   - Erstellen eines Dateneintrags (DE) umfassend den ersten Umwelteinfluss und den zusätzlichen Umwelteinfluss.

4. Verfahren nach Anspruch 2 oder 3, umfassend die Schritte:

   - in der Datenverarbeitungseinheit (9), Erstellen eines eigenen Dateneintrags (DE) für jede empfangene erste Meldenachricht und Erstellen eines eigenen Dateneintrags (DE) für jede empfangene zweite Meldenachricht.

5. Verfahren nach einem der Ansprüche 2 bis 4, umfassend die Schritte:

   - Senden einer weiteren zweiten Meldenachricht und Erstellens des Dateneintrags (DE) für zumindest einen weiteren Betankungsvorgang, Entnahmevorgang oder Verbrauch des Kraftstoffs desselben Fahrzeugs (1), wobei alle Dateneinträge (DE) eines Fahrzeugs (1) in einem gemeinsamen Datensatz (DS) gespeichert werden, und
   - Bestimmen des Umwelteinflusses des Fahrzeugs (1) auf Basis des Datensatzes (DS) mit zumindest zwei zu demselben Fahrzeug (1) zugehörigen Dateneinträgen (DE).

**6.** Verfahren nach Anspruch 5, wobei die Schritte des Sendens der ersten Meldenachricht, des Sendens der zweiten Meldenachricht und des Erstellens des Dateneintrags (DE) oder der Dateneinträge (DE) für zumindest einen weiteren Betankungsvorgang, Entnahmevorgang oder Verbrauch des Kraftstoffs ab einer ersten Inbetriebnahme des Fahrzeugs (1) durchgeführt und für jeden Betankungsvorgang, Entnahmevorgang oder Verbrauch des Kraftstoffs des Fahrzeugs (1) wiederholt werden.

**7.** Verfahren nach einem der Ansprüche 2 bis 6 zur Durchführung einer Lebenszyklus-Analyse, wobei der Schritt des Bestimmens des Umwelteinflusses des Fahrzeugs (1) die folgenden Schritte umfasst:

- Bestimmen eines bei der Herstellung des Fahrzeuges (1) entstandenen Umwelteinflusses, und
- Addieren des bei der Herstellung des Fahrzeuges (1) entstandenen Umwelteinflusses und eines gemäß allen Dateneinträgen (DE) für dieses Fahrzeug (1) durch den Kraftstoff entstandenen Umwelteinflusses.

**8.** Verfahren nach einem der Ansprüche 1 bis 7, wobei der Umwelteinfluss des Fahrzeugs (1) als Kennwert des Umwelteinflusses, insbesondere der $CO_2$-Bilanz, des Kraftstoffs bestimmt wird, mit dem das Fahrzeug (1) bei einem oder mehreren Betankungsvorgängen betankt wurde oder der vom Fahrzeug (1) entnommen oder verbraucht wurde, wobei nach dem Schritt des Bestimmens des Umwelteinflusses des Fahrzeugs (1) der folgende Schritt durchgeführt wird:

- Überprüfen, ob der Kennwert des Umwelteinflusses des betankten Kraftstoffes unterhalb eines vorbestimmten Schwellwertes liegt.

**9.** Verfahren nach einem der Ansprüche 1 bis 8, wobei der Umwelteinfluss des Fahrzeugs (1) als gewichteter Mittelwert des Kennwerts des Umwelteinflusses, insbesondere der $CO_2$-Bilanz, von zumindest zwei Kraftstoffen bestimmt wird, mit denen das Fahrzeug (1) bei mehreren Betankungsvorgängen betankt wurde oder die vom Fahrzeug (1) entnommen oder verbraucht wurden, wobei nach dem Schritt des Bestimmens des Umwelteinflusses des Fahrzeugs (1) der folgende Schritt durchgeführt wird:

- Überprüfen, ob der gewichtete Mittelwert der des Kennwerts des Umwelteinflusses des betankten Kraftstoffes unterhalb eines vorbestimmten Schwellwertes liegt.

**10.** Verfahren nach Anspruch 8 oder 9, umfassend den Schritt:

- Senden einer Sperrnachricht von der Datenverarbeitungseinheit (9) an eine Steuereinheit des Fahrzeugs (1), wenn der Schritt des Überprüfens ergab, dass der Kennwert des Umwelteinflusses oder der gewichtete Mittelwert des Kennwerts des Umwelteinflusses des betankten, entnommenen oder verbrauchten Kraftstoffs oberhalb eines vorbestimmten Schwellwertes liegt,

wobei das Fahrzeug (1) nach Erhalt der Sperrnachricht nicht oder nur in einem Modus mit eingeschränkter Leistung weiterfahren kann.

**11.** Verfahren nach einem der Ansprüche 1 bis 10, umfassend den Schritt:

- Ausgeben eines Alarmsignals, wenn die Datenverarbeitungseinheit (9) eine zweite Meldenachricht erhält, zu der keine erste Meldenachricht vorliegt.

**12.** Verfahren nach einem der Ansprüche 1 bis 11, wobei das System ferner eine Tankstelle (3) umfasst und die Tankstelle (3) vor dem Senden der ersten Meldenachricht die Fahrzeugidentifikation des zu betankenden Fahrzeugs (1) erfasst und diese in der ersten Meldenachricht inkludiert und die Datenverarbeitungseinheit (9) die erste Meldenachricht und die zweite Meldenachricht anhand der Fahrzeugidentifikation korreliert.

**13.** Verfahren nach einem der Ansprüche 1 bis 12, wobei die Datenverarbeitungseinheit (9) in einem Server (6) vorliegt, wobei ein Sendeempfänger (7) einer Tankstelle (3) oder eines Tankstellensystems (100) die erste Meldenachricht an den Server (6) sendet und wobei das Fahrzeug (1) einen Sendeempfänger (8) aufweist, welcher die zweite Meldenachricht an den Server (6) sendet.

**14.** Verfahren nach Anspruch 1 bis 12, wobei die Datenverarbeitungseinheit (9) am Fahrzeug (1) vorliegt und ein Sendeempfänger (7) einer Tankstelle (3) oder eines Tankstellensystems (100) die erste Meldenachricht an einen mit der Datenverarbeitungseinheit (9) verbundenen Sendeempfänger (8) am Fahrzeug (1) sendet, wobei die Datenverarbeitungseinheit (9) bevorzugt in einem Secure Element vorliegt.

**15.** Verfahren nach einem der Ansprüche 1 bis 14, umfassend die Schritte:

- Hinterlegen eines Zertifikats (zert1, zert2) in einer Tankstelle (3) oder im Fahrzeug (1), wobei das Zertifikat (zert1) als Teil der ersten Meldenachricht oder zweiten Meldenachricht an die Datenverarbeitungseinheit (9) gesandt wird; und

- Überprüfen der Authentizität des Zertifikats (zert1, zert2) in der Datenverarbeitungseinheit (9) vor dem Bestimmen des Umwelteinflusses des Fahrzeugs (1) oder dem Erzeugen des Dateneintrags (DE).

16. Verfahren nach einem der Ansprüche 1 bis 15, wobei eine weitere Sensoreinheit einen Verlust von Kraftstoff, insbesondere eine Abgabe des Kraftstoffs an die Umwelt, detektiert, und wobei die von der weiteren Sensoreinheit detektierte Abgabe beim Bestimmen des Umwelteinflusses mitberücksichtigt wird.

Fig. 1

Fig. 2

eval3

eval2

eval1

time0    time1    time2    time3

## Fig. 3

DS

ID1:{fuel1, time1}
{fuel1, time2}
{fuel2, time3}    → CO2?

9    8

7    msg1(ID1, fuel1)

3    1

11

init

ID1    10

51    5    4    2

fuel1    fuel2

## Fig. 4

Fig. 5

Europäisches
Patentamt

European
Patent Office

Office européen
des brevets

# EUROPÄISCHER RECHERCHENBERICHT

**Nummer der Anmeldung**

EP 24 16 0913

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2012/296549 A1 (ADAMS PETER W [GB]) 22. November 2012 (2012-11-22) * Absatz [0001] - Absatz [0008] * * Absatz [0016] - Absatz [0147] * * Abbildung 1 * * Anspruch 5 * ----- | 1-16 | INV. G06Q30/018 G07F13/02 G07C5/00 |
| A | US 2017/234714 A1 (STEVENSON DAVID L [US] ET AL) 17. August 2017 (2017-08-17) * Absatz [0006] - Absatz [0008] * * Absatz [0041] - Absatz [0134] * * Abbildung 1 * ----- | 1-16 | |
| A | ELGOWAINY AMGAD ET AL: "Current and Future United States Light-Duty Vehicle Pathways: Cradle-to-Grave Lifecycle Greenhouse Gas Emissions and Economic Assessment", ENVIRONMENTAL SCIENCE & TECHNOLOGY, Bd. 52, Nr. 4, 8. Februar 2018 (2018-02-08), Seiten 2392-2399, XP093169955, US ISSN: 0013-936X, DOI: 10.1021/acs.est.7b06006 * Zusammenfassung * * Seite 2394 - Seite 2396 * ----- | 1-16 | RECHERCHIERTE SACHGEBIETE (IPC) G07F G07G G07C G06Q |
| A | DE 10 2019 214423 A1 (BOSCH GMBH ROBERT [DE]) 25. März 2021 (2021-03-25) * Absatz [0007] - Absatz [0065] * * Absatz [0076] - Absatz [0142] * ----- | 1-16 | |
| A | DE 10 2023 110183 A1 (TOYOTA MOTOR CO LTD [JP]) 2. November 2023 (2023-11-02) * Absatz [0007] - Absatz [0033] * * Absatz [0034] - Absatz [0113] * * Abbildung 5 * ----- -/-- | 1-16 | |

Der vorliegende Recherchenbericht wurde für alle Patentansprüche erstellt

| Recherchenort | Abschlußdatum der Recherche | Prüfer |
|---|---|---|
| Den Haag | 4. Juni 2024 | Bohner, Michael |

Seite 1 von 2

23

Europäisches
Patentamt

European
Patent Office

Office européen
des brevets

# EUROPÄISCHER RECHERCHENBERICHT

**Nummer der Anmeldung**

EP 24 16 0913

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | DE 10 2009 009310 A1 (DAIMLER AG [DE]) 1. Oktober 2009 (2009-10-01) * Absatz [0001] - Absatz [0019] * * Absatz [0025] - Absatz [0038] * ----- | 1-16 | |
| A | US 5 964 812 A (SCHUMACHER DARREN [US] ET AL) 12. Oktober 1999 (1999-10-12) * Spalte 1, Zeile 11 - Zeile 37 * * Spalte 2, Zeile 17 - Spalte 5, Zeile 43 * ----- | 16 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| Den Haag | 4. Juni 2024 | Bohner, Michael |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**     EP 24 16 0913

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-06-2024

| Im Recherchenbericht angeführtes Patentdokument | Datum der Veröffentlichung | Mitglied(er) der Patentfamilie | Datum der Veröffentlichung |
|---|---|---|---|
| US 2012296549 A1 | 22-11-2012 | AU 2011208621 A1 | 19-07-2012 |
| | | BR 112012018003 A2 | 03-05-2016 |
| | | CA 2785879 A1 | 28-07-2011 |
| | | CN 102770888 A | 07-11-2012 |
| | | EP 2526530 A1 | 28-11-2012 |
| | | MY 168826 A | 04-12-2018 |
| | | PL 2526530 T3 | 30-10-2015 |
| | | RU 2012136112 A | 27-02-2014 |
| | | SG 181974 A1 | 30-08-2012 |
| | | US 2012296549 A1 | 22-11-2012 |
| | | WO 2011089251 A1 | 28-07-2011 |
| US 2017234714 A1 | 17-08-2017 | KEINE | |
| DE 102019214423 A1 | 25-03-2021 | CN 112537312 A | 23-03-2021 |
| | | DE 102019214423 A1 | 25-03-2021 |
| | | US 2021089025 A1 | 25-03-2021 |
| DE 102023110183 A1 | 02-11-2023 | CN 116968548 A | 31-10-2023 |
| | | DE 102023110183 A1 | 02-11-2023 |
| | | JP 2023164110 A | 10-11-2023 |
| | | US 2024075948 A1 | 07-03-2024 |
| DE 102009009310 A1 | 01-10-2009 | KEINE | |
| US 5964812 A | 12-10-1999 | US 5964812 A | 12-10-1999 |
| | | WO 9941583 A1 | 19-08-1999 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006044780 A1